# EUROPÄISCHE PATENTANMELDUNG

(11) **EP 3 702 401 A1**
(43) Veröffentlichungstag der Anmeldung: **02.09.2020**
(21) Anmeldenummer: 20170867.4
(22) Anmeldetag: 25.07.2018
(51) Int. Cl.: C08K 3/20, C08K 5/00, C08K 5/43, C08K 3/016, C09K 21/10, C08K 5/41, C08K 5/51, C08L 23/12

(54) **HALOGENFREIE SULFONSÄUREESTER UND/ODER SULFINSÄUREESTER ALS RADIKALGENERATOREN IN KUNSTSTOFFEN**

(30) Priorität: 25.07.2017 DE 102017212772
(62) Teilanmeldung aus: 18749322.6
(71) Anmelder: FRAUNHOFER-GESELLSCHAFT zur Förderung der angewandten Forschung e.V., 80686 München (DE)
(72) Erfinder: PFAENDNER, Rudolf, 64289 Darmstadt (DE); DRIEVER, Thomas, 64289 Darmstadt (DE); LEIPOLD, Anina, 64289 Darmstadt (DE); METZSCH-ZILLIGEN, Dr. Elke, 64289 Darmstadt (DE)
(74) Vertreter: Pfenning, Meinig & Partner mbB

(57) **Zusammenfassung**

Die vorliegende Erfindung betrifft die Verwendung von halogenfreien Sulfonsäureestern und/oder Sulfinsäureestern als Flammschutzmittel und/oder Flammschutzmittelsynergisten in Kunststoffen. Weiterhin betrifft die Erfindung die Verwendung dieser Verbindungen als Radikalgeneratoren in Kunststoffen, insbesondere zur Erhöhung des Molekulargewichts der Kunststoffe, zur Verzweigung und/oder Vernetzung der Kunststoffe, zur Verringerung des Molekulargewichts der Kunststoffe, zur Beeinflussung der Molekulargewichtsverteilung der Kunststoffe und zum Aufpropfen von ungesättigten Monomeren auf die Kunststoffe. Weiterhin betrifft vorliegende Erfindung die Verwendung der flammgeschützten Kunststoffzusammensetzungen in der Elektro- oder Elektronikindustrie, Bauindustrie, Transportindustrie, vorzugsweise Autos, Flugzeuge, Eisenbahnen und Schiffe, für medizinische Anwendungen, für Haushaltsgeräte, Fahrzeugteile, Konsumartikel, Verpackungen, Möbel und Textilien.

## Beschreibung

Die vorliegende Erfindung betrifft die Verwendung von halogenfreien Sulfonsäureestern und/oder Sulfinsäureestern als Radikalgeneratoren zur Modifikation von Kunststoffen, insbesondere zur Erhöhung des Molekulargewichts der Kunststoffe, zur Verzweigung und/oder Vernetzung der Kunststoffe, zur Verringerung des Molekulargewichts der Kunststoffe, zur Beeinflussung der Molekulargewichtsverteilung der Kunststoffe und zum Aufpfropfen von ungesättigten Monomeren auf die Kunststoffe. Weiterhin betrifft vorliegende Erfindung die Verwendung der flammgeschützten Kunststoffzusammensetzungen in der Elektro- oder Elektronikindustrie, Bauindustrie, Transportindustrie, vorzugsweise Autos, Flugzeuge, Eisenbahnen und Schiffe, für medizinische Anwendungen, für Haushaltsgeräte, Fahrzeugteile, Konsumartikel, Verpackungen, Möbel und Textilien.

Die meisten Kunststoffe sind brennbar und vergleichsweise leicht entflammbar. Um das Brandrisiko von Kunststoffen in bestimmten Anwendungen zu vermindern oder auszuschließen, ist es deshalb zwingend erforderlich, die Entflammbarkeit zu verringern und flammfeste Kunststoffzusammensetzungen einzusetzen. Dazu werden in der Regel Flammschutzmittel dem Kunststoff beigegeben, mit dem Ziel, das Entzünden für eine bestimmte Zeit zu verhindern oder die Brandausbreitung signifikant zu verzögern. Traditionelle Flammschutzmittel basieren auf chlor- und bromhaltigen Verbindungen (letztere meist in Kombination mit Antimontrioxid), auf phosphorhaltigen, auf stickstoffhaltigen Verbindungen und auf Metallydroxiden wie Aluminiumhydroxid (ATH) oder Magnesiumhydroxid (MDH). In neuerer Zeit werden häufig aus toxikologischen und ökotoxikologischen Gründen halogenfreie Flammschutzlösungen bevorzugt.

Zur Herstellung von flammgeschützten Kunststoffen gibt es eine Vielzahl von Flammschutzmitteln, die in der Regel substratspezifisch für ein bestimmtes Polymer und einen bestimmten Einsatzbereich, entsprechend den dafür zugrundeliegenden Normen, eingesetzt werden. Flammgeschützte Kunststoffe werden hauptsächlich in Elektro- und Elektronikanwendungen, im Transportbereich (Bahn, Flugzeug, Auto), bei Textilien und im Bauwesen verwendet.

Eine in den letzten Jahren entwickelte Flammschutzmittelklasse sowie Additivklasse sind Radikalgeneratoren auf der Basis von Oxyimiden. Diese sind beispielsweise in WO 2014/154636 A1, WO 2015/180888 A1, WO 2015/189034 A1, WO 2016/042038 A1, WO 2016/042040 A1, WO 2016/042043 A1 von der Fraunhofer-Gesellschaft beschrieben.

Sulfonsäurederivate wurden als Flammschutzmittel bisher nur mit halogenhaltigen Substituenten beschrieben, wobei in bekannter Weise die Halogengruppen für die Flammschutzmittel-Wirkung verantwortlich sind, siehe z.B. US 4,108,906, DE 28 34 884 oder DE 27 36 696.

WO 2011/067197 A2 beschreibt eine Sauerstoff-Scavenger-Zusammensetzung für Lebensmittelverpackungsanwendungen enthaltend (I) ein Polymer, (II) ein organisches Oxidationsadditiv basierend auf einem cyclischen Oxyimid, (III) ein Metallsalz, (IV) eine oxidierende Substanz, die verbraucht wird, und (V) optional Additive.

WO 2007/028731 A1 betrifft einen abbaubaren Polymergegenstand, wobei ein N-Hydroxyimid-Derivat als Abbaubeschleuniger verwendet wird.

Die im Stand der Technik beschriebenen Flammschutzmittel und Radikalgeneratoren weisen einige Nachteile auf. So zeigen sie z.B. eine unzureichende Verträglichkeit oder Löslichkeit in Polymeren auf, woraus auch eine geringe Wirkung resultieren kann. Weiterhin sind die im Stand der Technik beschriebenen Verbindungen oft schwer zu synthetisieren.

Ausgehend davon bestand eine Aufgabe der vorliegenden Erfindung darin Verbindungen zur Verwendung als Radikalgeneratoren eingesetzt werden können, die in Kunststoffen verwendbar sind und die eine gute Verträglichkeit oder Löslichkeit in diesen Kunststoffen aufweisen. Weiterhin soll durch die Verwendung dieser Stoffe eine verbesserte Wirkung erreicht werden, d.h. sie sollen schon in geringen Mengen wirksam sein. Außerdem sollen die Verbindungen einfach synthetisch zugänglich sein, bevorzugt aus großtechnisch verfügbaren Edukten, was es erlaubt diese kostengünstig herzustellen.

Diese Aufgabe wird durch die Verwendung von mindestens einem halogenfreien Sulfonsäureester und/oder mindestens einem halogenfreien Sulfinsäureester als Radikalgeneratoren in Kunststoffen gemäß Anspruch 1 gelöst.

Vorteilhafte Ausführungsformen der erfindungsgemäßen Verwendung von halogenfreien Sulfonsäureestern und/oder halogenfreien Sulfinsäureestern werden in den abhängigen Ansprüchen angegeben.

Vorteilhafte Verwendungen und Verfahren zu deren Durchführung werden in den Ansprüchen 10 bis 15 angegeben.

### Begriffsdefinitionen:

"Sulfonsäureester" im Sinne der vorliegenden Erfindung weisen die folgende Struktureinheit auf, wobei als R¹ die Gruppierung "O-N" ausgeschlossen ist. Diese Gruppierung fällt explizit nicht unter den Oberbegriff Heteroalkyl.

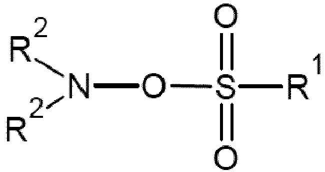

"Sulfinsäureester" im Sinne der vorliegenden Erfindung weisen die unten gezeigte Struktureinheit auf, wobei als R¹ die Gruppierung "O-N" ausgeschlossen ist. Diese Gruppierung fällt explizit nicht unter den Oberbegriff Heteroalkyl.

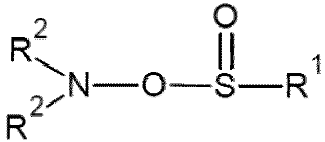

Unter "Sulfonsäureazanylestern" werden gemäß der vorliegenden Erfindungen Verbindungen mit der unten links abgebildeten Struktureinheit verstanden, unten rechts sind Sulfinsäureazanylester abgebildet, dabei ist für R¹ jeweils die Gruppierung "O-N" ausgeschlossen. Diese Gruppierung fällt explizit nicht unter den Oberbegriff Heteroalkyl.

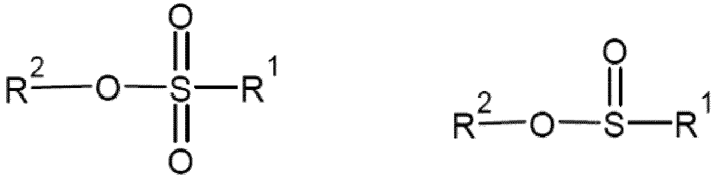

Im Sinne der vorliegenden Erfindung sind "ungesättigte Monomere" Monomere mit einer Doppel- oder Dreifachbindung.

Unter "Pfropfen" oder "grafting" wird im Sinne der vorliegenden Erfindung das Aufbringen von weiteren Ketten auf die Hauptkette eines Polymers verstanden. Eine "pfropfungsfähige Gruppe" meint eine funktionelle Gruppe, die in der Lage ist an die Hauptkette eines Polymers anzuknüpfen.

Ein "abbaufähiges Polyolefin" im Sinne vorliegender Erfindung, meint ein Polyolefin dessen Molekulargewicht durch radikalische Prozesse abgebaut werden kann.

Unter der "Halbwertszeit" eines halogenfreien Sulfon- oder Sulfinsäureesters wird im Sinn der vorliegenden Erfindung die Zeit verstanden nach der die Hälfte des halogenfreien Sulfon- oder Sulfinsäureesters bei einer bestimmten Temperatur in Radikale zerfallen ist, bevorzugt ist diese Temperatur im Bereich von 180 bis 280°C und insbesondere bevorzugt im Bereich von 200 bis 250°C.

"Kontrollierter Abbau von Polyolefinen" im Sinne der vorliegenden Erfindung meint die Erniedrigung des Molekulargewichts eines Polyolefins unter Zusatz von einer bestimmten Menge von Radikalgeneratoren in einem thermischen Prozess auf einen Zielwert hin.

Unter "Flammschutzmittelsynergisten" werden gemäß der vorliegenden Erfindung Verbindungen verstanden, die die flammhemmende Wirkung anderer Flammschutzmittel erhöhen, d.h. bei Zusatz des Flammschutzmittelsynergisten wird eine bessere flammhemmende Wirkung erzielt, als wenn die Gesamtmenge an Flammschutzmittel und Flammschutzmittelsynergist kleiner oder gleich der ursprünglichen Menge an Flammschutzmittel ist. Es ist nicht ausgeschlossen, dass Flammschutzmittelsynergisten auch selbst als Flammschutzmittel wirken.

### Verwendung als Radikalgeneratoren

Ein Aspekt der vorliegenden Erfindung betrifft die Verwendung von mindestens einem halogenfreien Sulfonsäureester und/oder mindestens einem halogenfreien Sulfinsäureestern als Radikalgeneratoren in Kunststoffen. Im Folgenden werden bevorzugte Ausführungsformen der erfindungsgemäßen Verwendung angegeben.

Erfindungsgemäß handelt es sich bei den halogenfreien Sulfonsäureestern und/oder halogenfreien Sulfinsäureestern um halogenfreie Sulfonsäureazanylester der allgemeinen Formel (la) und/oder um halogenfreie Sulfinsäureazanylester der allgemeinen Formel (Ib); 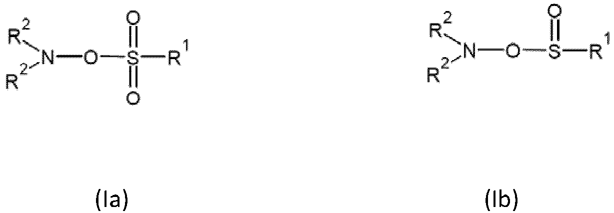 wobei die Reste R¹ und R² jeweils unabhängig voneinander ausgewählt sind aus der Gruppe bestehend aus substituierten oder unsubstituierten Alkylgruppen, Heteroalkylgruppen, Cycloalkylgruppen, Heterocycloalkylgruppen, Acylgruppen, Arylgruppen und Heteroarylgruppen, wobei 2 Reste R² ein zyklisches System bilden können.

Nach einer weiteren bevorzugten Ausführungsform der vorliegenden Erfindung ist der halogenfreie Sulfonsäureester ein Sulfonsäureazanylester ausgewählt aus der Gruppe bestehend aus einer der Verbindungen mit den nachfolgenden Formeln oder Mischungen daraus: 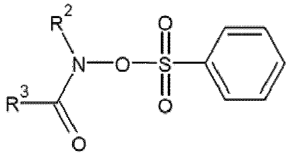 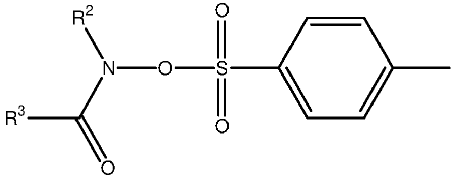 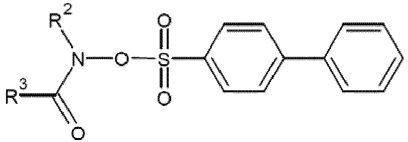 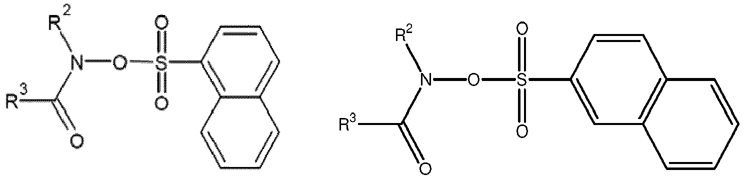 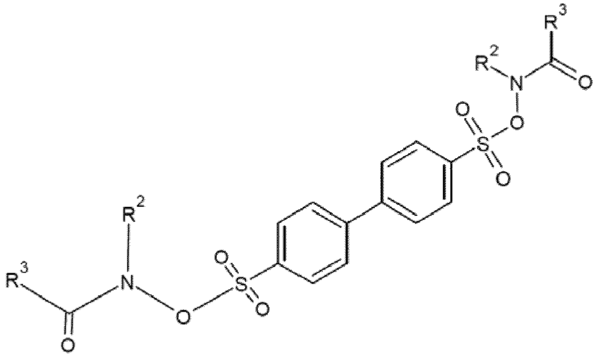 wobei R² die gleiche Bedeutung hat wie oben angegeben und bevorzugt ausgewählt ist aus der Gruppe bestehend aus substituierten oder unsubstituierten Alkylgruppen, Heteroalkylgruppen, Cycloalkylgruppen, Heterocycloalkylgruppen; und R³ ist ausgewählt aus der Gruppe bestehend aus substituierten oder unsubstituierten Alkylgruppen, Heteroalkylgruppen, Cycloalkylgruppen, Heterocycloalkylgruppen; wobei R² und R³ ein zyklisches System bilden können; und wobei die aromatischen Struktureinheiten substituiert sein können; wobei Alkylgruppen als Substituenten bevorzugt sind.

Gemäß einer anderen bevorzugten Ausführungsform der vorliegenden Erfindung ist der halogenfreie Sulfonsäureester ein Sulfonsäureazanylester mit der unten angegebenen Formel: 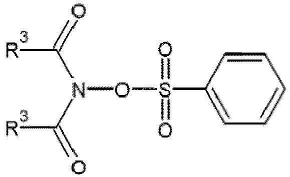 wobei R³ ausgewählt ist aus der Gruppe bestehend aus substituierten oder unsubstituierten Alkylgruppen, Heteroalkylgruppen, Cycloalkylgruppen, Heterocycloalkylgruppen und einem zyklischen System gebildet aus 2 Resten R³.

Eine weitere bevorzugte Ausführungsform der vorliegenden Erfindung sieht vor, dass der halogenfreie Sulfonsäureester ein Sulfonsäureazanylester ausgewählt aus der Gruppe bestehend aus einer der Verbindungen mit den nachfolgenden Formeln oder Mischungen daraus ist:

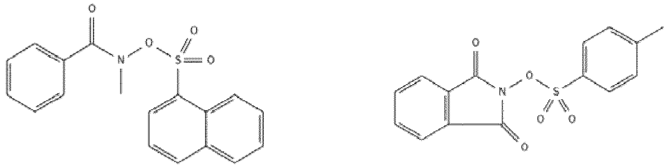

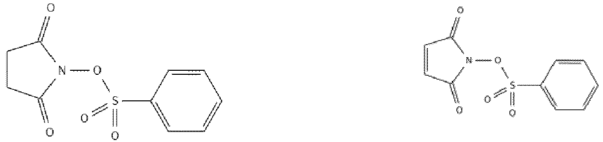

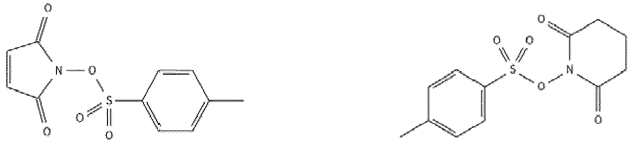

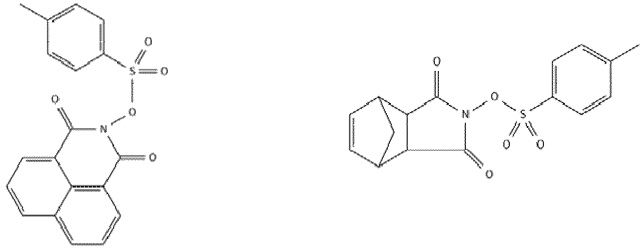

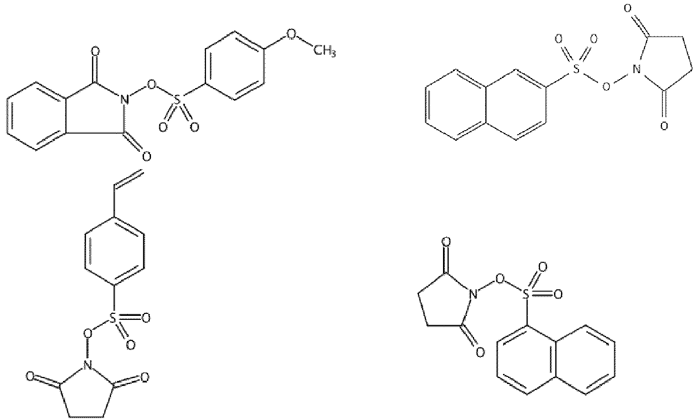

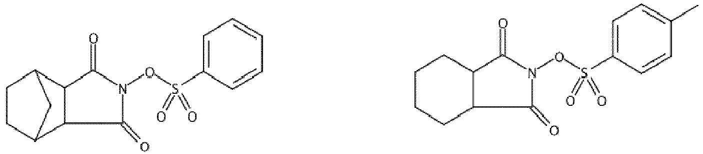

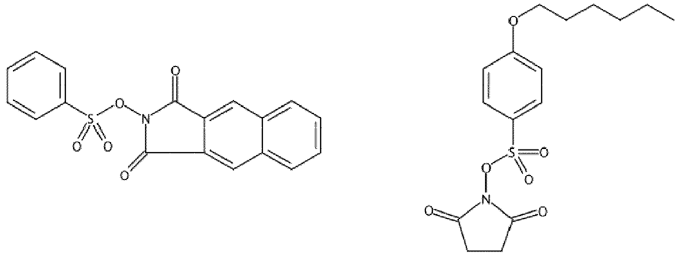

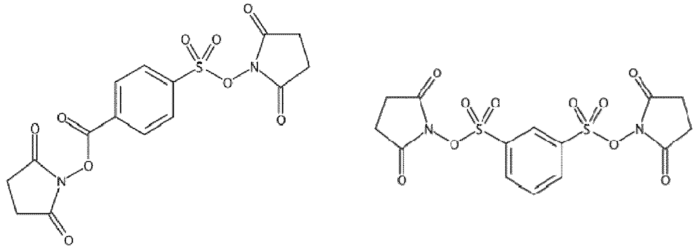

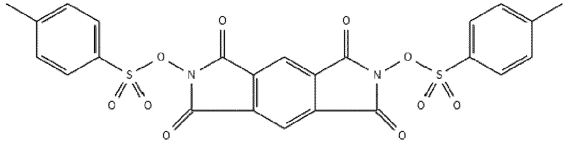

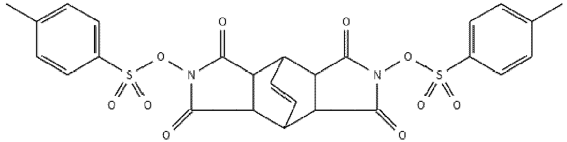

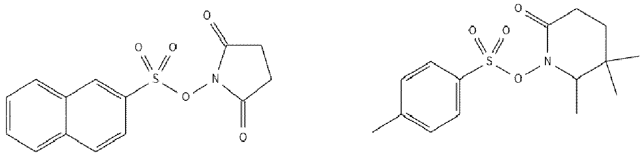

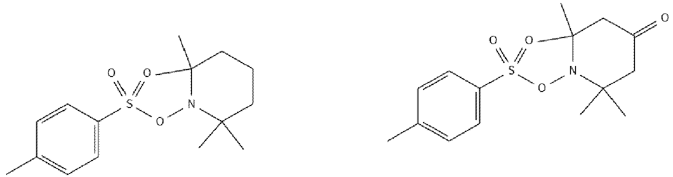

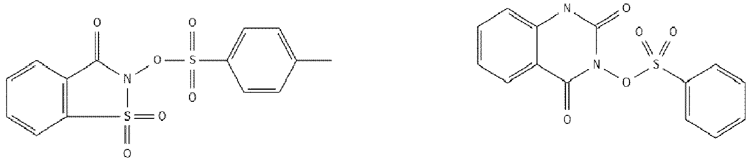

Beispiele für erfindungsgemäße Sulfonsäureester, die eine Heteroarylgruppe enthalten sind:

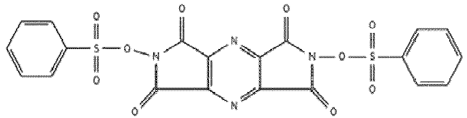

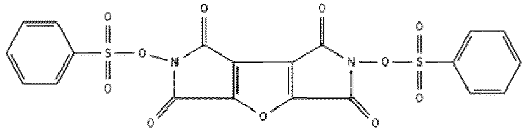

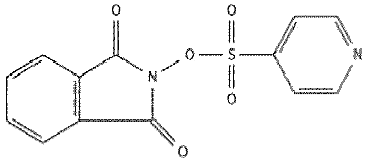

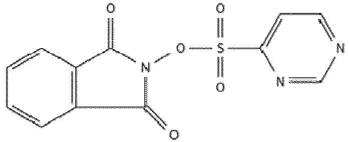

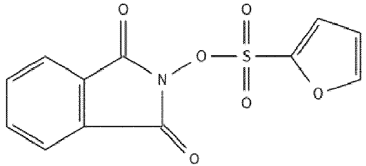

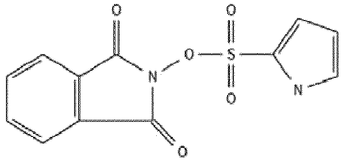

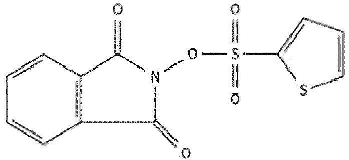

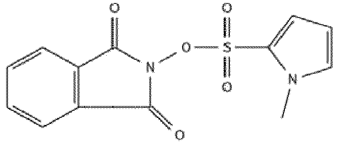

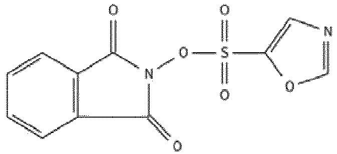

Nach einer anderen bevorzugten Ausführungsform der vorliegenden Erfindung ist der halogenfreie Sulfonsäureester ein Sulfonsäureazanylester in oligomerer oder polymerer Form, der durch Polymerisation oder polymeranaloge Umsetzung hergestellt wird besonders bevorzugt ausgewählt ist aus Monomeren der Gruppe bestehend aus einer der Verbindungen mit den nachfolgenden Formeln oder Mischungen daraus:

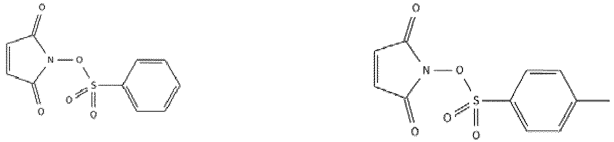

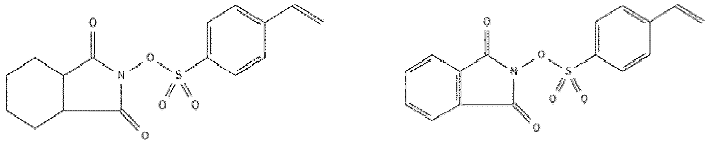

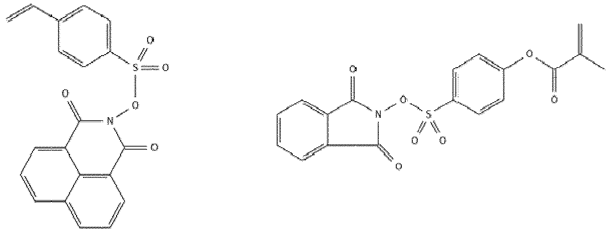

Nach einer weiteren bevorzugten Ausführungsform vorliegender Erfindung ist der Kunststoff ausgewählt aus der Gruppe bestehend aus
a) Polymeren aus Olefinen oder Diolefinen, bevorzugt Polyethylen, insbesondere bevorzugt LDPE, LLDPE, VLDPE, ULDPE, MDPE, HDPE, UHMWPE, durch Einsatz von Metallocen-Katalysatoren hergestelltes Polyethylen, Polypropylen, langkettenverzweigte Polypropylen-Copolymere die mit alpha-Olefinen als Comonomere hergestellt werden wie z.B. mit 1-Buten, 1-Hexen, 1-Octen oder 1-Octadecen, Polyisobutylen, Poly-4-methyl-penten-1, Polybutadien, Polyisopren, wie z.B. auch Naturkautschuk (NR), Polycycloocten, Polyalkylen-Kohlenmonoxid-Copolymere, Copolymeren in Form von statistischen oder Blockstrukturen, insbesondere Polypropylen-Polyethylen (EP), EPM oder EPDM mit z.B. 5-Ethyliden-2-Norbornen als Comonomer, Ethylen-Vinylacetat (EVA), Ethylen-Acrylester, insbesondere Ethylen-Butylacrylat, Ethylen-Acrylsäure und deren Salze, sowie Terpolymere, insbesondere Ethylen Acrylsäure-Glycidylacrylat, Pfropfpolymere, insbesondere Polypropylen-g Maleinsäureanhydrid, Polypropylen-g-Acrylsäure und Polyethylen-g-Acrylsäure, Polyethylen-Polybutylacrylat-graft-Maleinsäureanhydrid;
b) Polystyrol, Poly-alpha-methylstyrol, Polyvinylnaphthalin, Polyvinylbiphenyl, Polyvinyltoluol, Styrol-Butadien (SB), Styrol Butadien-Styrol (SBS), Styrol-Ethylen-Butylen-Styrol (SEBS), Styrol-Ethylen-Propylen Styrol, Styrolisopren, Styrol-Isopren-Styrol (SIS), Styrol-butadien-acrylnitril (ABS), Styrol-acrylnitril (SAN), Styrol-acrylnitril-acrylat (ASA), Styrol-Ethylen, Styrol-Maleinsäureanhydrid-Polymere einschießlich entsprechender Pfropfcopolymere, insbesondere Styrol auf Butadien, Maleinsäureanhydrid auf Styrol, Butadien-Styrol oder Styrol-Ethylen-Butylen-Styrol, sowie Pfropfcopolymere aus Methylmethacrylat, Styrol-Butadien und Styrol-butadien-acrylnitril (ABS) oder Styrol-butadien-methacrylnitril (MABS) sowie hydrierte Polystyrol-Derivate wie z.B. Polyvinylcyclohexan;
c) halogenenthaltenden Polymeren, insbesondere Polyvinylchlorid (PVC), Polychloropren und Polyvinylidenchlorid (PVDC), Copolymeren aus Vinylchlorid und Vinylidenchlorid oder aus Vinylchlorid und Vinylacetat, chloriertes Polyethylen, Polyvinylidenfluorid, Epichlorhydrin-Homo und Copolymere insbes. mit Ethylenoxid (ECO);
d) Polymeren von ungesättigten Estern, insbesondere Polyacrylate und Polymethacrylate, besonders bevorzugt, Polymethylmethacrylat (PMMA), Polybutylacrylat, Polylaurylacrylat, Polystearylacrylat, Polyacrylnitril, Polyacrylamide, Copolymere, insbesondere Polyacrylnitril-Polyalkylacrylat;
e) Polymeren aus ungesättigten Alkoholen und Derivaten, insbesondere Polyvinylalkohol, Polyvinylacetat, Polyvinylbutyral, Polyallylphthalat, Polyallylmelamin;
f) Polyacetalen, insbesondere Polyoxymethylen (POM) oder Copolymere insbesondere mit Butanal;
g) Polyphenylenoxiden und Blends mit Polystyrol oder Polyamiden;
h) Polymeren von cyclischen Ethern insbesondere Polyethylen-glycol, Polypropylenglycol, Polyethylenoxid und Polypropylenoxid;
i) Polyurethanen, bevorzugt aus hydroxyterminierten Polyethern oder Polyestern und aromatischen oder aliphatischen Isocyanaten, wie z.B. 2,4- oder 2,6 Toluylendiisocyanat oder Methylendiphenyldiisocyanat insbesondere auch lineare Polyurethane (TPU), Polyharnstoffen,
j) Polyamiden, insbesondere PA 6, PA 6.6, PA 6.10, PA 4.6, PA 4.10, PA 6.12, PA 10.10, PA 12.12, PA 11, PA 12 sowie teilaromatische und aromatische Polyamide, insbesondere Polyphthalamide, besonderes bevorzugt hergestellt aus Terephthalsäure und/oder Isophthalsäure und aliphatischen Diaminen wie z.B. Hexamethylendiamin oder m-Xylylendiamin oder aus aliphatischen Dicarbonsäuren, insbesondere Adipinsäure oder Sebazinsäure und aromatischen Diaminen, insbesondere 1,4- oder 1,3-Diaminobenzol;
k) Polyimiden, insbesondere Polyamidimiden, Polyetherimiden, Polyesterimiden, Poly(ether)ketonen, Polysulfonen, insbesondere Polyethersulfonen, Polyarylsulfonen, Polyphenylensulfiden, Polybenzimidazolen, Polyhydantoinen;
l) Polyestern aus aliphatischen oder aromatischen Dicarbonsäuren und Diolen oder aus Hydroxy-Carbonsäuren wie z.B. Polyethylenterephthalat (PET), Polybutylenterephthalat (PBT), Polypropylenterephthalat (PTT), Polyethylennaphthylat (PEN), Poly-1,4-dimethylolcyclohexanterephthalat, Polyhydroxybenzoat, Polyhydroxynaphthalat, Polymilchsäure (PLA), Polybutylensuccinat (PBS), Polyhydroxyalkanoate (PHA) wie z.B. Polyhydroxybuttersäure (PHB) oder Polyhydroxyvaleriansäure (PHV); Polycaprolacton;
m) Polycarbonaten, Polyestercarbonaten, sowie Blends von Polycarbonaten mit anderen Polymeren, insbesondere PC/ABS, PC/PBT, PC/PET/PBT;
n) Cellulosederivate, insbesondere Cellulosenitrat, Celluloseacetat, Cellulosepropionat, Cellulosebutyrat;
o) Epoxidharzen, bestehend aus di- oder polyfunktionellen Epoxidverbindungen in Kombination mit z.B. Härtern auf der Basis von Aminen, Anhydriden, Dicyandiamid, Mercaptanen, Isocyanaten oder katalytisch wirkenden Härtern,
p) Phenolharzen wie z.B. Phenol-Formaldehyd-Harze, Harnstoff-Formaldehyd-Harze, Melamin-Formaldehydharze,
q) ungesättigten Polyesterharzen aus ungesättigten Dicarbonsäuren und Diolen mit Vinylverbindungen z.B. Styrol, Alkydharze
r) Silikonen, z.B. auf der Basis von Dimethylsiloxanen, Methyl-Phenylsiloxanen oder Diphenylsiloxanen z.B. Vinylgruppen terminiert
s) sowie Mischungen, Kombinationen oder Blends aus zwei oder mehr der unter a) bis o) genannten Polymere.

Sofern es sich bei den unter a) bis r) angegebenen Polymeren um Copolymere handelt, können diese in Form von statistischen ("random"), Block- oder "tapered" Strukturen vorliegen. Weiterhin können die genannten Polymeren in Form von linearen, verzweigten, sternförmigen oder hyperverzweigten Strukturen vorliegen.

Sofern es sich bei den unter a) bis r) angegebenen Polymeren um stereoreguläre Polymere handelt, können diese in Form von isotaktischen, stereotaktischen, aber auch ataktischen Formen oder als Stereoblockcopolymere vorliegen.

Weiterhin können die unter a) bis r) angegebenen Polymere sowohl amorphe als auch (teil-)kristalline Morphologien aufweisen.

Ggf. können die unter a) genannten Polyolefine auch vernetzt vorliegen, z.B. vernetztes Polyethylen, das dann als X-PE bezeichnet wird.

Die genannten Polymeren a) bis r) können dabei nicht nur als Neuware sondern auch in Form von Rezyklaten vorliegen, z.B. als Produktionsabfälle oder aus Wertstoffsammlungen ("post-consumer" Rezyklate).

Eine bevorzugte Ausführungsform der vorliegenden Erfindung betrifft die folgenden Modifikationen der Kunststoffe:
- das Molekulargewicht der Kunststoffe wird erhöht; und/oder
- eine Verzweigung oder Vernetzung der Kunststoffe erfolgt; und/oder
- das Molekulargewicht der Kunststoffe wird verringert; und/oder
- die Molekulargewichtsverteilung der Kunststoffe wird beeinflusst; und/oder
- ungesättigte Monomere werden auf die Kunststoffe gepfropft.

Dabei ist es weiterhin bevorzugt, dass die Verwendung in einem der oben angegeben Kunststoffe a) bis o) oder Mischungen daraus erfolgt.

### Kontrollierter Abbau von Polyolefinen

Das erfindungsgemäße Verfahren zum kontrollierten Abbau von Polyolefinen enthält die folgenden Schritte:
I. Bereitstellen zumindest eines halogenfreien Sulfonsäureesters und/oder zumindest eines halogenfreien Sulfinsäureesters;
II. Bereitstellen zumindest eines abbaufähigen Polyolefins;
III. Kontaktieren und Aufschmelzen der in Schritt I. und II. bereitgestellten Verbindungen;
IV. Erhitzen der Schmelze aus Schritt III. für mehr als 1 Minute.

Nach einer bevorzugten Ausführungsform des Verfahrens zum kontrollierten Abbau von Polyolefinen handelt es sich bei dem in Schritt I. bereitgestellten zumindest einen halogenfreien Sulfonsäureester und/oder zumindest einen halogenfreien Sulfinsäureester um eine der oben definierten Verbindungen.

Weiterhin ist es bevorzugt, dass die Temperatur während der Schritte III. und IV. so gewählt wird, dass die Halbwertszeit des zumindest einen halogenfreien Sulfonsäureesters und/oder zumindest einen halogenfreien Sulfinsäureesters kleiner als 2 Minuten und bevorzugt kleiner als 1 Minute ist.

Außerdem ist es bevorzugt, dass Schritt IV. für mehr als 2 Minuten, bevorzugt für 2 bis 10 Minuten durchgeführt wird.

Bevorzugte Aufschmelztemperaturen sind im Bereich von 180 bis 280 °C, besonders bevorzugt sind 200 bis 250°C.

Ganz besonders bevorzugt ist das Verfahren zum kontrollierten Abbau von Polypropylen und zur Herstellung von CRPP ("controlled rheology polypropylene).

### Vernetzung von Polyolefinen

Das erfindungsgemäße Verfahren zur Vernetzung von Polyolefinen enthält die folgenden Schritte:
(1) Bereitstellen zumindest eines halogenfreien Sulfonsäureesters und/oder zumindest eines halogenfreien Sulfinsäureesters;
(2) Bereitstellen zumindest eines abbaufähigen Polyolefins;
(3) Kontaktieren und Aufschmelzen der in Schritt (1) und (2) bereitgestellten Verbindungen;
(4) Erhitzen der Schmelze aus Schritt (3) für mehr als 1 Minute.

Nach einer bevorzugten Ausführungsform des Verfahrens zum Vernetzen von Polyolefinen weist das Verfahren einen weiteren Schritt (5) auf, der vor oder während Schritt (4) ausgeführt wird und vorsieht, dass ein Vernetzungsadditiv ausgewählt aus der Gruppe bestehend aus Triallylisocyanurat, Triisoallylcyanurat, Diallylterephthalat, mehrfunktionellen Acrylaten und Methacrylaten, insbesondere Trimethylolpropantrimethacrylat und Mischungen hiervon, zugesetzt wird.

Nach einer bevorzugten Ausführungsform des Verfahrens zum Vernetzen von Polyolefinen handelt es sich bei dem in Schritt (1) bereitgestellten zumindest einen halogenfreien Sulfonsäureester und/oder zumindest einen halogenfreien Sulfinsäureester um eine der oben definierten Verbindungen.

Weiterhin ist es bevorzugt, dass die Temperatur während der Schritte (3) und (4) so gewählt wird, dass die Halbwertszeit des zumindest einen halogenfreien Sulfonsäureesters und/oder zumindest einen halogenfreien Sulfinsäureesters kleiner als 2 Minuten und bevorzugt kleiner als 1 Minute ist.

Außerdem ist es bevorzugt, dass Schritt (4) für mehr als 2 Minuten, bevorzugt für 2 bis 10 Minuten durchgeführt wird.

Bevorzugte Aufschmelztemperaturen sind im Bereich von 180 bis 280 °C, besonders bevorzugt sind 200 bis 250 °C.

### Pfropfen von Polyolefinen

Das erfindungsgemäße Verfahren zum Pfropfen von Polyolefinen enthält die folgenden Schritte:
a. Bereitstellen zumindest eines halogenfreien Sulfonsäureesters und/oder zumindest eines halogenfreien Sulfinsäureesters;
b. Bereitstellen zumindest eines abbaufähigen Polyolefins;
c. Bereitstellen mindestens eines Monomers, das eine pfropfungsfähige Gruppe aufweist;
d. Kontaktieren und Aufschmelzen der in Schritt a. bis c. bereitgestellten Verbindungen;
e. Erhitzen der Schmelze aus Schritt d. für mehr als 1 Minute.

Nach einer bevorzugten Ausführungsform des Verfahrens zum Pfropfen von Polyolefinen handelt es sich bei dem in Schritt a. bereitgestellten zumindest einen halogenfreien Sulfonsäureester und/oder zumindest einen halogenfreien Sulfinsäureester um eine der oben definierten Verbindungen.

Weiterhin ist es bevorzugt, dass die Temperatur während der Schritte c. und d. so gewählt wird, dass die Halbwertszeit des zumindest einen halogenfreien Sulfonsäureesters und/oder zumindest einen halogenfreien Sulfinsäureesters kleiner als 2 Minuten und bevorzugt kleiner als 1 Minute ist.

Außerdem ist es bevorzugt, dass Schritt d. für mehr als 2 Minuten, bevorzugt für 2 bis 10 Minuten durchgeführt wird.

Das Monomer in Schritt c. wird so ausgewählt, dass es bei der Verarbeitungstemperatur wenig oder nicht flüchtig ist.

Weiterhin ist es bevorzugt, dass das Monomer in Schritt c. ausgewählt ist aus der Gruppe bestehend aus Maleinsäureanhydrid, Itaconsäureanhydrid, Acrylsäure, (Meth)acrylsäureester und Mischungen hiervon.

Bevorzugte Aufschmelztemperaturen sind im Bereich von 180 bis 280 °C, besonders bevorzugt sind 200 bis 250 °C.

Grundsätzlich können die erfindungsgemäßen Verbindungen in verschiedenen Formen in das Polymere bzw. die Polymerschmelze eingebracht werden, z.B. in Form von Pulver, Granulat, Lösung, Dispersion, Emulsion oder Schuppen eingebracht werden. Vorzugsweise wird die erfindungsgemäße Verbindung mit dem Polymer oder Kunststoffgemisch gemischt, die Polymermatrix in die Schmelze überführt und anschließend abgekühlt. Alternativ hierzu ist es ebenso möglich, die Verbindung in einem schmelzflüssigen Zustand in eine Polymerschmelze einzubringen.

Für den Fall, dass der Polymerzusammensetzung weitere Bestandteile zugefügt werden, können diese separat, in Form von Flüssigkeiten, Dispersionen, Emulsionen, Pulvern, Granulaten oder kompaktierten Produkten oder zusammen mit der erfindungsgemäßen Additivzusammensetzung wie zuvor beschrieben den Polymeren zugesetzt werden.

Die Einarbeitung der oben beschriebenen erfindungsgemäßen Verbindungen und ggf. der zusätzlichen Additive in den Kunststoff erfolgt durch übliche Verarbeitungsmethoden, wobei das Polymer aufgeschmolzen und mit der erfindungsgemäßen Verbindung und den ggf. weiteren Zusätzen gemischt wird, vorzugsweise durch Mischer, Kneter und Extruder. Als Verarbeitungsmaschinen bevorzugt sind Extruder wie z.B. Einschneckenextruder, Zweischneckenextruder, Planetwalzenextruder, Ringextruder, Co-Kneter, die vorzugsweise mit einer Vakuumentgasung ausgestattet sind. Die Verarbeitung kann dabei unter Luft oder ggf. unter Inertgasbedingungen wie z.B. unter Stickstoff erfolgen.

Weiterhin können die erfindungsgemäßen Verbindungen in Form von sogenannten Masterbatchen oder Konzentraten, die beispielsweise 10-90 % der erfindungsgemäßen Zusammensetzungen in einem Polymeren enthalten, hergestellt und eingebracht werden.

Die Polymeren, die die hier beschriebenen erfindungsgemäßen Verbindungen enthalten, können zur Herstellung von Formkörpern, extrudierten Gegenständen, Rotationsgießformkörpern, Spritzgießformkörpern, Blasformkörpern, ein- und mehrschichtigen Folien, extrudierten Profilen, Bändern, Fasern, Filamenten, Schäumen, Oberflächenbeschichtungen und dergl. verwendet werden.

Die vorliegende Erfindung zeichnet sich durch die nachfolgenden Aspekte aus:
1. Verwendung von mindestens einem halogenfreien Sulfonsäureester und/oder mindestens einem halogenfreien Sulfinsäureester als Flammschutzmittel und/oder Flammschutzmittelsynergist in Kunststoffen.
2. Verwendung nach Aspekt 1, dadurch gekennzeichnet, dass es sich bei den halogenfreien Sulfonsäureestern und/oder halogenfreien Sulfinsäureestern um halogenfreie Sulfonsäureazanylester der allgemeinen Formel (la) und/oder um halogenfreie Sulfinsäureazanylester der allgemeinen Formel (Ib) handelt; 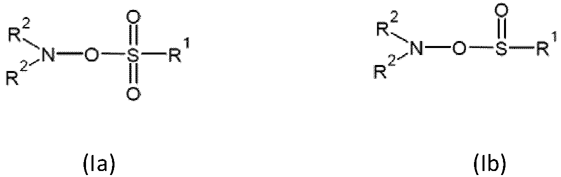 wobei die Reste R¹ und R² jeweils unabhängig voneinander ausgewählt sind aus der Gruppe bestehend aus substituierten oder unsubstituierten Alkylgruppen, Heteroalkylgruppen, Cycloalkylgruppen, Heterocycloalkylgruppen, Acylgruppen, Arylgruppen und Heteroarylgruppen, wobei 2 Reste R² ein zyklisches System bilden können.
3. Verwendung nach Aspekt 1 oder 2, dadurch gekennzeichnet, dass der halogenfreie Sulfonsäureester ein Sulfonsäureazanylester ausgewählt ist aus der Gruppe bestehend aus einer der Verbindungen mit den nachfolgenden Formeln oder Mischungen daraus: 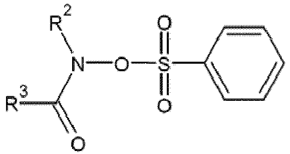 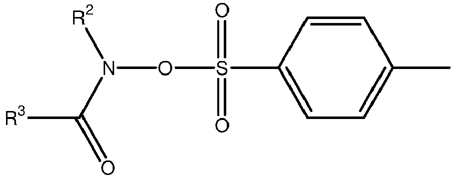 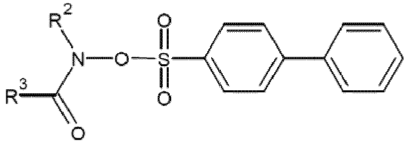 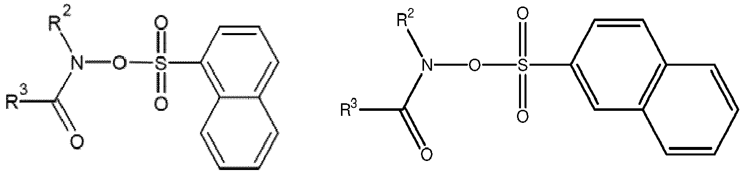 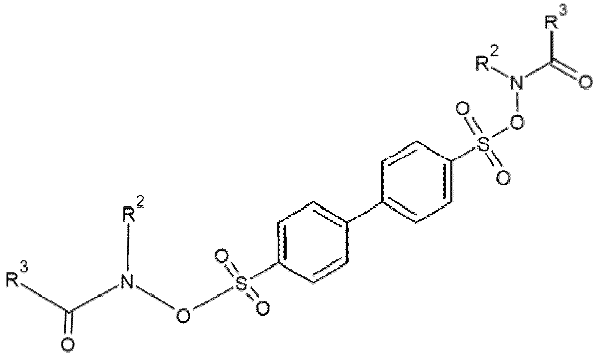
   wobei R² die gleiche Bedeutung hat wie oben angegeben und bevorzugt ausgewählt ist aus der Gruppe bestehend aus substituierten oder unsubstituierten Alkylgruppen, Heteroalkylgruppen, Cycloalkylgruppen, Heterocycloalkylgruppen; und
   R³ ausgewählt ist aus der Gruppe bestehend aus substituierten oder unsubstituierten Alkylgruppen, Heteroalkylgruppen, Cycloalkylgruppen, Heterocycloalkylgruppen;
   wobei R² und R³ ein zyklisches System bilden können; und
   wobei die aromatischen Struktureinheiten substituiert sein können;
   wobei Alkylgruppen als Substituenten bevorzugt sind.
4. Verwendung nach Aspekt 1 oder 2, dadurch gekennzeichnet, dass der halogenfreie Sulfonsäureester ein Sulfonsäureazanylester mit der unten angegebenen Formel ist; 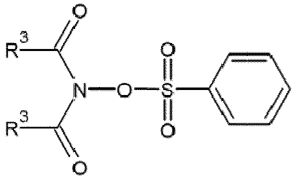 wobei R³ ausgewählt ist aus der Gruppe bestehend aus substituierten oder unsubstituierten Alkylgruppen, Heteroalkylgruppen, Cycloalkylgruppen, Heterocycloalkylgruppen und einem zyklischen System gebildet aus 2 Resten R³.
5. Verwendung nach Aspekt 1 oder 2, dadurch gekennzeichnet, dass der halogenfreie Sulfonsäureester ein Sulfonsäureazanylester ausgewählt ist aus der Gruppe bestehend aus einer der Verbindungen mit den nachfolgenden Formeln oder Mischungen daraus: 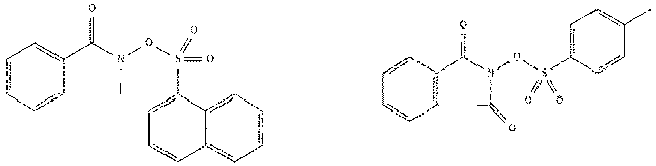 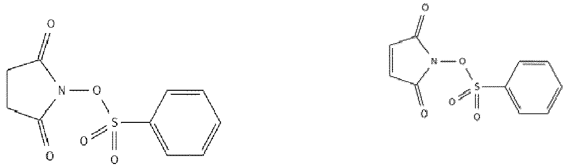 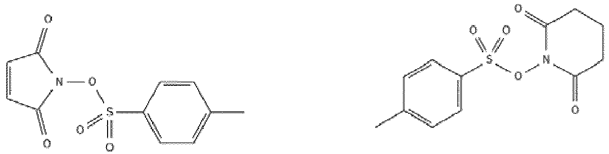 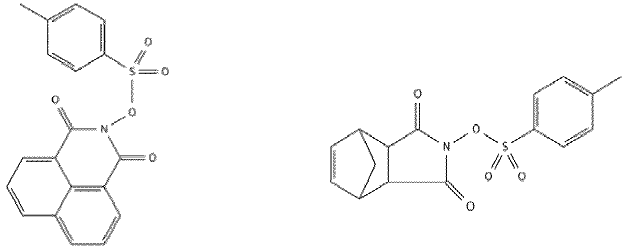 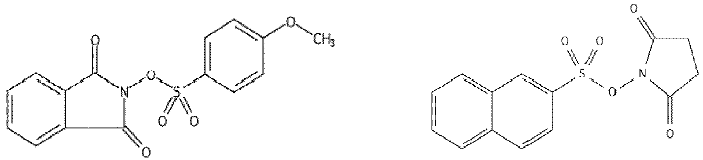 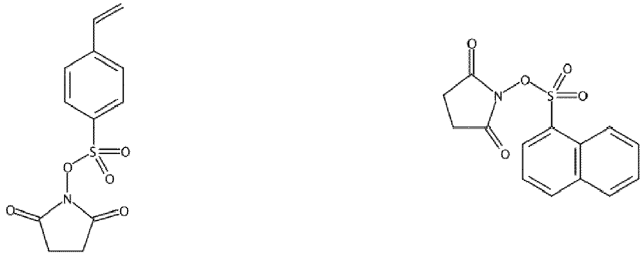 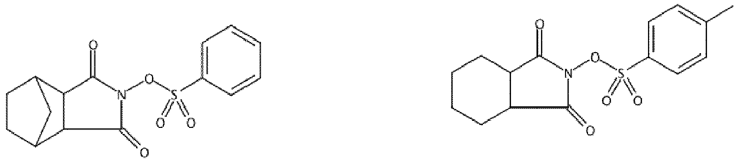 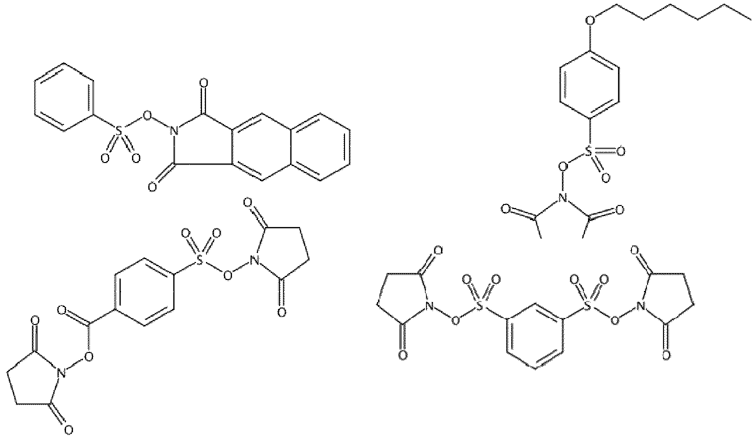 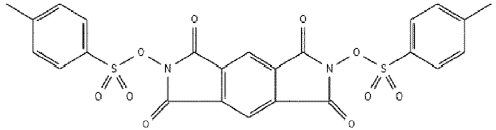 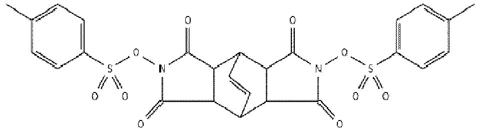 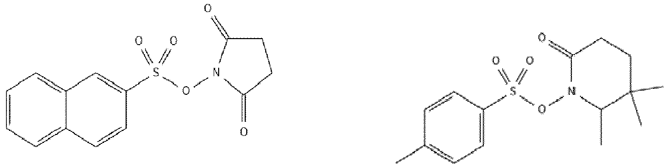 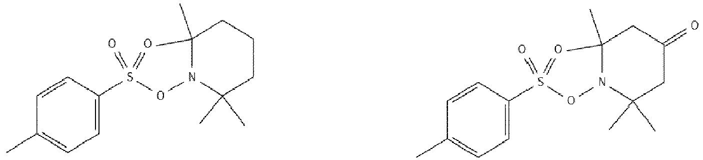 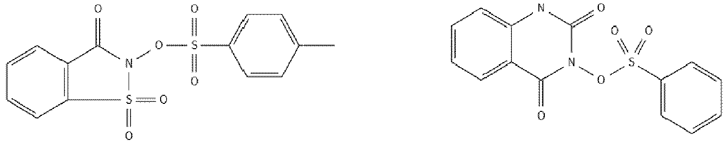
6. Verwendung nach Aspekt 1 oder 2, dadurch gekennzeichnet, dass der halogenfreie Sulfonsäureester ein Sulfonsäureazanylester in oligomerer oder polymerer Form ist, der bevorzugt durch Polymerisation oder polymeranaloge Umsetzung hergestellt wird aus Monomeren ausgewählt aus der Gruppe bestehend aus einer der Verbindungen mit den nachfolgenden Formeln oder Mischungen daraus: 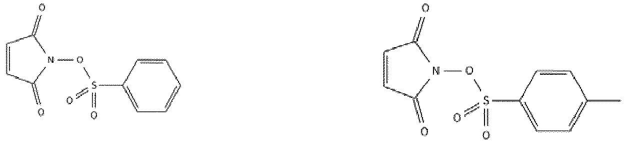 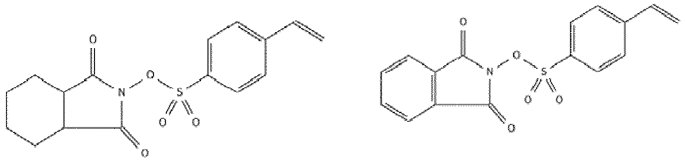 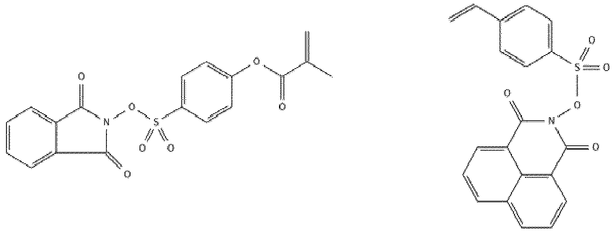
7. Verwendung nach einem der vorhergehenden Aspekte, dadurch gekennzeichnet, dass der Kunststoff ausgewählt ist aus der Gruppe bestehend aus
   a) Polymeren aus Olefinen oder Diolefinen, bevorzugt Polyethylen, insbesondere bevorzugt LDPE, LLDPE, VLDPE, ULDPE, MDPE, HDPE, UHMWPE, durch Einsatz von Metallocen-Katalysatoren hergestelltes Polyethylen, Polypropylen, langkettenverzweigte Polypropylen-Copolymere die mit alpha-Olefinen als Comonomere hergestellt werden Polyisobutylen, Poly-4-methyl-penten-1, Polybutadien, Polyisopren, Polycycloocten, Polyalkylen-Kohlenmonoxid-Copolymere, Copolymeren in Form von statistischen oder Blockstrukturen, insbesondere Polypropylen-Polyethylen (EP), EPM oder EPDM, Ethylen-Vinylacetat (EVA), Ethylen-Acrylester, insbesondere Ethylen-Butylacrylat, Ethylen-Acrylsäure und deren Salze, sowie Terpolymere, insbesondere Ethylen Acrylsäure-Glycidylacrylat, Pfropfpolymere, insbesondere Polypropylen-g Maleinsäureanhydrid, Polypropylen-g-Acrylsäure und Polyethylen-g-Acrylsäure, Polyethylen-Polybutylacrylat-graft-Maleinsäureanhydrid;
   b) Polystyrol, Poly-alpha-methylstyrol, Polyvinylnaphthalin, Polyvinylbiphenyl, Polyvinyltoluol, Styrol-Butadien (SB), Styrol Butadien-Styrol (SBS), Styrol-Ethylen-Butylen-Styrol (SEBS), Styrol-Ethylen-Propylen Styrol, Styrolisopren, Styrol-Isopren-Styrol (SIS), Styrol-butadien-acrylnitril (ABS), Styrol-acrylnitril (SAN), Styrol-acrylnitril-acrylat (ASA), Styrol-Ethylen, Styrol-Maleinsäureanhydrid-Polymere einschießlich entsprechender Pfropfcopolymere, insbesondere Styrol auf Butadien, Maleinsäureanhydrid auf Styrol Butadien-Styrol oder Styrol-Ethylen-Butylen-Styrol, sowie Pfropfcopolymere aus Methylmethacrylat, Styrol-Butadien und Styrol-butadien-acrylnitril (ABS) oder Styrol-butadien-methacrylnitril (MABS) sowie hydrierte Polystyrol-Derivate wie z.B. Polyvinylcyclohexan;
   c) halogenenthaltenden Polymeren, insbesondere Polyvinylchlorid (PVC), Polychloropren und Polyvinylidenchlorid (PVDC), Copolymeren aus Vinylchlorid und Vinylidenchlorid oder aus Vinylchlorid und Vinylacetat, chloriertes Polyethylen, Polyvinylidenfluorid, Epichlorhydrin-Homo und Copolymere insbes. mit Ethylenoxid (ECO);
   d) Polymeren von ungesättigten Estern, insbesondere Polyacrylate und Polymethacrylate, besonders bevorzugt, Polymethylmethacrylat (PMMA), Polybutylacrylat, Polylaurylacrylat, Polystearylacrylat, Polyacrylnitril, Polyacrylamide, Copolymere, insbesondere Polyacrylnitril-Polyalkylacrylat;
   e) Polymeren aus ungesättigten Alkoholen und Derivaten, insbesondere Polyvinylalkohol, Polyvinylacetat, Polyvinylbutyral, Polyallylphthalat, Polyallylmelamin;
   f) Polyacetalen, insbesondere Polyoxymethylen (POM) oder Copolymere insbesondere mit Butanal;
   g) Polyphenylenoxiden und Blends mit Polystyrol oder Polyamiden;
   h) Polymeren von cyclischen Ethern insbesondere Polyethylenglycol, Polypropylenglycol, Polyethylenoxid, Polypropylenoxid;
   i) Polyurethanen, bevorzugt aus hydroxyterminierten Polyethern oder Polyestern und aromatischen oder aliphatischen Isocyanaten, insbesondere lineare Polyurethane und Polyharnstoffe;
   j) Polyamiden, insbesondere PA 6, PA 6.6, PA 6.10, PA 4.6, PA 4.10, PA 10.10, PA 6.12, PA 12.12, PA 11, PA 12 sowie teilaromatische und aromatische Polyamide, insbesondere Polyphthalamide, besonderes bevorzugt hergestellt aus Terephthalsäure und/oder Isophthalsäure und aliphatischen Diaminen oder aus aliphatischen Dicarbonsäuren, insbesondere Adipinsäure oder Sebazinsäure und aromatischen Diaminen, insbesondere 1,4- oder 1,3-Diaminobenzol;
   k) Polyimiden, insbesondere Polyamidimiden, Polyetherimiden, Polyesterimiden, Poly(ether)ketonen, Polysulfonen, insbesondere Polyethersulfonen, Polyarylsulfonen, Polyphenylensulfiden, Polybenzimidazolen, Polyhydantoinen;
   I) Polyestern aus aliphatischen oder aromatischen Dicarbonsäuren und Diolen oder aus Hydroxy-Carbonsäuren wie z.B. Polyethylenterephthalat (PET), Polybutylenterephthalat (PBT), Polypropylenterephthalat, Polyethylennaphthylat, Poly-1,4-dimethylolcyclohexanterephthalat, Polyhydroxybenzoat, Polyhydroxynaphthalat, Polymilchsäure (PLA), Polybutylensuccinat (PBS), Polyhydroxyalkanoate (PHA) wie z.B. Polyhydroxybuttersäure (PHB) oder Polyhydroxyvaleriansäure (PHV), Polycaprolacton;
   t) Polycarbonaten, Polyestercarbonaten, sowie Blends von Polycarbonaten mit anderen Polymeren, insbesondere PC/ABS, PC/PBT, PC/PET/PBT;
   u) Cellulosederivate, insbesondere Cellulosenitrat, Celluloseacetat, Cellulosepropionat, Cellulosebutyrat;
   v) Epoxidharzen, bestehend aus di- oder polyfunktionellen Epoxidverbindungen in Kombination mit z.B. Härtern auf der Basis von Aminen, Anhydriden, Dicyandiamid, Mercaptanen, Isocyanaten oder katalytisch wirkenden Härtern,
   w) Phenolharzen wie z.B. Phenol-Formaldehyd-Harze, Harnstoff-Formaldehyd-Harze, Melamin-Formaldehydharze,
   x) ungesättigten Polyesterharzen aus ungesättigten Dicarbonsäuren und Diolen mit Vinylverbindungen z.B. Styrol, Alkydharze
   y) Silikonen, z.B. auf der Basis von Dimethylsiloxanen, MethylPhenyl-siloxanen oder Diphenylsiloxanen z.B. Vinylgruppen terminiert;
   z) sowie Mischungen, Kombinationen oder Blends aus zwei oder mehr der unter a) bis r) genannten Polymere.
8. Verwendung nach einem der vorhergehenden Aspekte, dadurch gekennzeichnet, dass der zumindest eine halogenfreie Sulfonsäureestern und/oder halogenfreien Sulfinsäureester in Kombination mit einer Verbindung ausgewählt aus
   i. anorganischen Flammschutzmitteln, bevorzugt Al(OH)₃, Mg(OH)₂, AlO(OH), MgCO₃, Schichtsilikaten, insbesondere Montmorillonit der unmodifiziert oder organisch modifiziert sein kann, Sepiolit, Attapulgit, Vermiculit, Wollastonit, Doppelsalzen, insbesondere Mg-Al-Silikate, POSS-(Polyhedral Oligomeric Silsesquioxane) Verbindungen, Huntit, Hydromagnesit oder Halloysit sowie Sb₂O₃, Sb₂O₅, MoO₃, Zinkstannat, Zinkhydroxystannat, Mica, Calciumcarbonat;
   ii. stickstoffhaltigen Flammschutzmitteln, bevorzugt Melamin, Melem, Melam, Melon, Melaminderivaten, Melaminkondensationsprodukten oder Melaminsalzen, Benzoguanamin, Polyisocyanuraten, Allantoin, Phosphacenen, insbesondere Melamincyanurat, Melaminphosphat, Dimelaminphosphat, Melaminhypophosphit, Melaminpyrophosphat, Melaminpolyphosphat, Melamin-Metall-Phosphaten, insbesondere Melaminaluminumphosphat, Melaminzinkphosphat, Melaminmagnesiumphopsphat, sowie den entsprechenden Pyrophosphaten und Polyphosphaten, Poly-[2,4-(piperazin-1,4-yl)-6-(morpholin-4-yl)-1,3,5-triazin], Ammoniumpolyphosphat, Melaminborat und Melaminhydrobromid;
   iii. Radikalbildnern, bevorzugt Alkoxyaminen, Hydroxylaminestern, Azoverbindungen, Dicumyl oder Polycumyl; sowie Oxyimide gemäß WO 2014/154636 A1, WO 2015/180888 A1, WO 2015/189034 A1, WO 2016/042038 A1, WO 2016/042040 A1, WO 2016/042043 A1;
   iv. Phosphorhaltigen Flammschutzmitteln, bevorzugt roter Phosphor, Phosphate, insbesondere Resorcindiphosphat, Bisphenol-A-diphosphat und ihre Oligomere, Bisphenol-A-bis (dicresyl)phosphat, Triphenylphosphat, Ethylendiamindiphosphat, Phosphinate, insbesondere Salze der hypophosphorigen Säure und ihrer Derivate, insbesondere Alkylphosphinatsalzen, besonders bevorzugt Aluminiumdiethylphosphinat, Zinkdiethylphosphinat oder Aluminiumphosphinat, Aluminiumhypophosphit, Calciumhypophosphit, Natriumhypophosphit, Aluminiumphosphit, Aluminiumphosphonat, Phosphonatester, Aluminiummethylmethylphosphonat, oligomere und polymere Derivate der Methanphosphonsäure, 9,10 Dihydro-9-oxa-10-phosphoryl-phenanthren-10-oxid (DOPO) und deren substituierte Verbindungen, polymeres Phosphordiamidat, 4,4'-Bishydroxydeoxybenzoin-polyphosphonat, 2-Carboxy-ethylmethylphosphinsäure-2-carboxyethylphenylphosphinsäure, Diethyl-N,N'-bis(2-hydroxyethyl)aminomethylphosphonat, Dimethyl propyl phosphonat, Dimethylspirophosphonat, Diphenylcresyl phosphate, Hydrochinon-bis-(diphenyl phosphat), Halogenhaltigen Flammschutzmitteln auf Chlor- und Brombasis, bevorzugt polybromierte Diphenyloxide, insbesondere Decabromdiphenyloxid, Tris(3-bromo-2,2-bis(bromomethyl)propyl-phosphat, Tris(tribromneopentyl)phosphat, Tetrabromphthalsäure, 1,2-Bis(tribromphenoxy)ethan, Hexabromcyclododecan, Dibromoneopentylglycol, bromiertes Diphenylethan, 1,3,5-Tris-(2,3-dibrompropyl)isocyanurat, Tris-(2,3-dibrompropyl)-isocyanurat, Ethylen bis(tetrabromophthalimid), Tetrabromo-bisphenol A, Tris(tribromneopentyl)alkohol, bromiertes Polystyrol, bromiertes Polybutadien, Polystyrolbromiertes, Polybutadien-Copolymere, bromiertes Epoxidharz, bromiertes Polycarbonat mit oder ohne Endgruppen-Blockierung, Polypentabrombenzylacrylat, bevorzugt in Kombination mit Sb₂O₃ und/oder Sb₂O₅;
   v. Boraten, insbesondere Zinkborat oder Calciumborat mit und ohne Trägermaterial;
   vi. Schwefelhaltigen Verbindungen, bevorzugt elementarer Schwefel, Disulfide und Polysulfide, Thiuramsulfid, Dithiocarbamate, Mercaptobenzthiazol und Sulfenamiden;
   vii. Antidrip-Mitteln, insbesondere Polytetrafluorethylen;
   viii. siliciumhaltigen Verbindungen, insbesondere Polyphenylsiloxanen;
   ix. Salze von Sulfonsäuren wie z.B. Phosphoniumsulfonat, Kaliumperfluorobutansulfonat, Kalium-p-toluolsulfonat, Kaliumdiphenylsulfonsulfonat
   x. Smoke suppressants wie z.B. Molybdänoxid, Ammoniumoctamolybdat, Kupfermolybdat, Zinkmolybdat, Molybdatkomplexe z.B. Calcium-molybdat, Calcium-molybdat-zink, Zinkmolybdat auf Magnesium-Silikat Träger;
   xi. Naturstoffe mit flammhemmender Wirkung wie Lignin, Chitosan, Phytinsäure
   xii. Kohlenstoffverbindungen wie Graphit, expandierbarer Graphit, Graphen oder Kohlenstoffnanoröhrchen (CNT)
   xiii. sowie Mischungen, Kombinationen oder Blends aus zwei oder mehr der unter i. bis xiii. genannten Stoffe,
      verwendet wird.
9. Verwendung nach einem der vorhergehenden Aspekte, dadurch gekennzeichnet, dass der zumindest eine halogenfreie Sulfonsäureester und/oder halogenfreie Sulfinsäureester in Kombination mit einer Verbindung ausgewählt aus den bromhaltigen Flammschutzmitteln unter Ausschluss von Antimonoxid-enthaltenden Flammschutzmitteln als Flammschutzmittel und/oder Flammschutzmittelsynergist in Antimonoxid-freien Kunststoffen verwendet wird.
10. Flammgeschützte Kunststoffzusammensetzung enthaltend die Komponenten (A) bis (D) oder bestehend aus diesen Komponenten:
   (A) 30 bis 99,9 Gew.-% mindestens eines Kunststoffes ausgewählt aus der Gruppe bestehend aus thermoplastischen Kunststoffen, elastomeren Kunststoffen, duroplastischen Kunststoffen und Mischungen daraus;
   (B) 0,1 bis 20 Gew.-% mindestens eines Flammschutzmittels wie in einem der Aspekte 1 bis 6 angegeben und Mischungen davon;
   (C) 0 bis 70 Gew.-% mindestens eines von (B) verschiedenen Flammschutzmittels oder Flammschutzmittelsynergisten und Mischungen hiervon;
   (D) 0 bis 50 Gew.-% mindestens eines Additivs oder Zusatzstoffes; wobei sich die Gewichtsanteile der Komponenten (A) bis (D) auf 100 Gew.% ergänzen.
11. Flammgeschützte Kunststoffzusammensetzung nach vorhergehendem Aspekt, dadurch gekennzeichnet, dass Komponente (C) ausgewählt ist aus der Gruppe bestehend aus
   i. anorganischen Flammschutzmitteln, bevorzugt Al(OH)₃, Mg(OH)₂, AlO(OH), MgCO₃, Schichtsilikaten, insbesondere Montmorillonit der unmodifiziert oder organisch modifiziert sein kann, Sepiolit, Attapulgit, Vermiculit, Wollastonit, Doppelsalzen, insbesondere Mg-Al-Silikate, POSS-(Polyhedral Oligomeric Silsesquioxane) Verbindungen, Huntit, Hydromagnesit oder Halloysit sowie Sb₂O₃, Sb₂O₅, MoO₃, Zinkstannat, Zinkhydroxystannat, Mica, Calciumcarbonat;
   ii. stickstoffhaltigen Flammschutzmitteln, bevorzugt Melamin, Melem, Melam, Melon, Melaminderivaten, Melaminkondensationsprodukten oder Melaminsalzen, Benzoguanamin, Polyisocyanuraten, Allantoin, Phosphacenen, insbesondere Melamincyanurat, Melaminphosphat, Dimelaminphosphat, Melaminpyrophosphat, Melaminpolyphosphat, Melaminhypophosphit, Melamin-Metall-Phosphaten, insbesondere Melaminaluminumphosphat, Melaminzinkphosphat, Melaminmagnesiumphosphat, sowie den entsprechenden Pyrophosphaten und Polyphosphaten, Poly-[2,4-(piperazin-1,4-yl)-6-(morpholin-4-yl)-1,3,5-triazin], Ammoniumpolyphosphat, Melaminborat und Melaminhydrobromid, Polymer aus Ethylendiamin und 4,6-dichloro-*N*-phenyl-1,3,5-triazin-2-amine, Poly(1,3,5-triazin-2-aminoethanoldiethylenetriamin, Ammoniumsulfamat;
   iii. Radikalbildnern, bevorzugt Alkoxyaminen, Hydroxylaminestern, Azoverbindungen, Dicumyl oder Polycumyl, sowie Oxyimide gemäß WO 2014/154636 A1, WO 2015/180888 A1, WO 2015/189034 A1, WO 2016/042038 A1, WO 2016/042040 A1, WO 2016/042043 A1;
   iv. Phosphorhaltigen Flammschutzmitteln, bevorzugt roter Phosphor, Phosphate, insbesondere Resorcindiphosphat, Bisphenol-A-diphosphat und ihre Oligomere, Bisphenol-A-bis (dicresyl)-phosphat, Triphenylphosphat, Ethylendiamindiphosphat, Phosphinate, insbesondere Salze der hypophosphorigen Säure und ihrer Derivate, insbesondere Alkylphosphinatsalzen, besonders bevorzugt Aluminiumdiethylphosphinat, Zinkdiethylphosphinat oder Aluminiumphosphinat, Aluminiumhypophosphit, Calciumhypophosphit, Natriumhypophosphit, Aluminiumphosphit, Aluminiumphosphonat, Phosphonatester, Aluminiummethylmethylphosphonat, oligomere und polymere Derivate der Methanphosphonsäure, 9,10 Dihydro-9-oxa-10-phosphorylphenanthren-10-oxid (DOPO) und deren substituierte Verbindungen, polymeres Phosphordiamidat, 4,4'-Bishydroxydeoxybenzoin-polyphosphonat, 2-Carboxyethylmethylphosphinsäure-2-carboxyethylphenylphosphinsäure, Diethyl-N,N'-bis(2-hydroxyethyl)aminomethylphosphonat, Dimethyl propyl phosphonat, Dimethylspirophosphonat, Diphenylcresyl phosphate, Hydrochinon-bis-(diphenyl phosphat);
   v. Halogenhaltigen Flammschutzmitteln auf Chlor- und Brombasis, bevorzugt polybromierte Diphenyloxide, insbesondere Decabromdiphenyloxid, Tris(3-bromo-2,2-bis(bromomethyl)propylphosphat, Tris(tribromneopentyl)phosphat, Tetrabromphthalsäure, 1,2-Bis(tribromphenoxy)ethan, Hexabromcyclododecan, bromiertes Diphenylethan, Tris-(2,3-dibrompropyl)isocyanurat, Ethylen bis(tetrabromophthalimid), Tetrabromo-bisphenol A, bromiertes Polystyrol, bromiertes Polybutadien, Polystyrolbromiertes, Polybutadien-Copolymere, bromiertes Epoxidharz, Polypentabrombenzylacrylat, bevorzugt in Kombination mit Sb₂O₃ und/oder Sb₂O₅;
   vi. Boraten, insbesondere Zinkborat oder Calciumborat;
   vii. Schwefelhaltigen Verbindungen, bevorzugt elementarer Schwefel, Disulfide und Polysulfide, Thiuramsulfid, Dithiocarbamate, Mercaptobenzthiazol und Sulfenamiden;
   viii. Antidrip-Mitteln, insbesondere Polytetrafluorethylen;
   ix. siliciumhaltigen Verbindungen, insbesondere Polyphenylsiloxanen;
   x. Salze von Sulfonsäuren wie z.B. Phosphoniumsulfonat, Kaliumperfluorobutansulfonat, Kalium-p-toluolsulfonat, Kaliumdiphenylsulfonsulfonat
   xi. Smoke suppressants wie z.B. Molybdänoxid, Ammoniumoctamolybdat, Kupfermolybdat, Zinkmolybdat, Molybdatkomplexe z.B. Calcium-molybdat, Calcium-molybdat-zink, Zink-molybdat auf Magnesium-Silikat Träger;
   xii. Naturstoffe mit flammhemmender Wirkung wie Lignin, Chitosan, Phytinsäure
   xiii. Kohlenstoffverbindungen wie Graphit, expandierbarer Graphit, Graphen oder Kohlenstoffnanoröhrchen (CNT)
   xiv. sowie Mischungen, Kombinationen oder Blends aus zwei oder mehr der unter i. bisiiiix. genannten Stoffe.
12. Flammgeschützte Kunststoffzusammensetzung nach Aspekt 10 oder 11, dadurch gekennzeichnet, dass sie frei von Antimonverbindungen ist.
13. Flammgeschützte Kunststoffzusammensetzung nach einem der beiden vorhergehenden Aspekte, dadurch gekennzeichnet, dass Komponente (D) ausgewählt ist aus der Gruppe bestehend aus UV-Absorbern, Lichtstabilisatoren, UV-Stabilisatoren, bevorzugt phenolischen, aminischen und/oder schwefelhaltigen Antioxidantien, sterisch gehinderten Aminen, Phosphiten, Phosphoniten, Hydroxylaminen, Benzofuranonen, Metalldesaktivatoren, Füllstoffdesaktivatoren, Nukleierungsmittel, Schlagzähigkeitsverbesserer, Weichmacher, Gleitmittel, Rheologiemodifikatoren, Verarbeitungshilfsmitteln, Pigmenten, Farbstoffen, optischen Aufhellern, antimikrobiellen Wirkstoffen, Antistatika, Slipmitteln, Antiblockmitteln, Kopplungsmitteln, Dispergiermitteln, Kompatibilisatoren, Sauerstofffänger, Säurefänger, Markierungsmittel oder Antifoggingmittel und Mischungen hiervon;
   bevorzugte Säurefänger sind ausgewählt aus der Gruppe bestehend aus Salzen von langkettigen Carbonsäuren, insbesondere Calciumstearat, Magnesiumstearat, Zinkstearat, Calciumlactat, Calciumstearoyl-2-lactylat, Hydrotalciten;
   bevorzugte Licht- und UV-Stabilisatoren sind ausgewählt aus der Gruppe bestehend aus phenolischen Antioxidantien, Phosphiten Phosphoniten, sterisch gehinderten Aminen (HALS) und Mischungen hiervon;
   besonders bevorzugte phenolische Antioxidantien sind ausgewählt aus der Gruppe bestehend aus Octadecyl-3-(3, 5-di-tert-butyl-4-hydro xyphenyl)-propionat, Pentaerythritol-tetrakis[3-(3,5-d*i-tert-b*utyl-4-hydroxyphenyl)propionat, Tris(3,5-di-tert-butyl-4-hydroxyphenyl)isocyanurat,1,3,5-Trimethyl-2,4,6-tris(3,5-di-tert-butyl-4-hydroxyphenyl)isocya nurat, 1,3,5-Trimethyl-2 ,4,6-tris(3, 5-di-tert-butyl-4-hydro xybenzyl)benzol, Triethylenglycol-bis[3-(3-tert-butyl-4-hydroxy-5-methylphenyl)propionat, N,N'-Hexan-1,6-diyl bis[3-(3,5-di-tert-butyl-4-hyd roxyphenyl)propionsäureamid und Mischungen hiervon;
   besonders bevorzugte Phosphite und Phosphonite sind ausgewählt aus der Gruppe bestehend aus Tris-(2,4-di-tert-butylphenyl)phosphit, Di-isodecylpentaerythritoldiphosphit, Bis(2,4-di-tert-butylphenyl)pentaerythritoldiphosphit, Bis(2,4-di-cumylphenyl)pentaerythritol-diphosphit, Bis(2,6-di-tert-butyl-4-methylphenyl)pentaerythritol-diphosphit, Diisodecyloxypentaerythritoldiphosphit, Bis(2,4-di-tert butyl-6-methylphenyl)pentaerythritoldiphosph it, Bis(2,4,6-tris(tert-butylphenyl)pentaerythritoldiphosphit, Tetrakis(2, 4-di-tert-butyl-phenyl)-4,4'- biphenylendiphosphonit und Mischungen hiervon;
   besonders bevorzugte aminische Antioxidantien sind ausgewählt aus der Gruppe bestehend aus N,N'-Di-isopropyl-p-phenylendiamin, N,N'-Di-sec-butyl-pphenylendiamin, N,N'-Bis(1,4-dimethylpentyl)-p-phenyl-endiamin, N,N'-Bis(1-ethyl-3- methylpentyl)-p-phenylendiamin, N,N'-Bis(1-methylheptyl)-p-phenylendiamin, N,N'-Dicyclohexylp-phenylendiamin, N,N'-Diphenyl-p-phenylendiamin, N,N'-Bis(2-naphthyl)-p-phenylendiamin, Nlsopropyl-N'-phenyl-p-phenylendiamin, N-(1,3-Dimethylbutyl)-N' -phenyl-p-phenylendiamin, N-(1-Methylheptyl)-N'-phenyl-p-phenylendiamin, N-Cyclohexyl-N'-phenyl-p-phenylendiamin und Mischungen hiervon;
   besonders bevorzugte schwefelhaltige Antioxidantien sind ausgewählt aus der Gruppe bestehend aus Distearylthiodipropionat, Dilauryldipropionat und Mischungen hiervon;
   besonders bevorzugte Hydroxylamine sind ausgewählt aus der Gruppe bestehend aus N,N-Dialkylhydroxylamin, N,N-Dibenzyl-hydroxylamin, N,N-Dilaurylhydroxylamin, N,N-Distearylhydro xylamin, N-Benzyl-α-phenylnitron, N-Octadecyl-α-hexadecylnitron;
   besonders bevorzugte sterisch gehinderte Amine sind ausgewählt aus der Gruppe bestehend aus 1,1-Bis(2,2,6,6-tetramethyl-4-piperidyl)succinat, Bis(1,2,2,6,6-pentamethyl-4-piperidyl)sebazat, Bis(1-octyloxy-2,2,6,6-tetramethyl-4-piperidyl)sebazat, Bis(1,2,2,6,6-pentamethyl-4-piperidyl)-n-butyl-3,5-di-tert-butyl-4-hydroxybenzylmalonat, das Kondensationsprodukt aus 1-(2-Hydroxyethyl)-2,2,6,6-tetramethyl-4-hydroxypiperidin und Succinsäure, lineare oder zyklische Kondensationsprodukte von N,N'-Bis(2,2,6,6-tetramethyl-4-piperidyl)hexamethylendiamin und 4-tert-Octylamino-2,6-di-chloro-1,3,5-triazin, Tris(2 ,2,6,6- tetramethyl-4-piperidyl)nitrilotriacetat, Tetrakis(2,2,6,6-tetra-methyl-4-piperidyl)-1,2,3,4-butantetracarboxylat, 1,1'-(1,2-Ethandiyl)-bis(3,3,5,5-tetramethylpiperazinon), 4-Benzoyl-2,2,6,6-tetramethylpiperidin, 4-Stearyloxy-2,2,6,6-tetramethylpiperidin, lineare oder zyklische Kondensationsprodukte aus N,N'-Bis-(2,2,6,6-tetramethyl-4-piperidyl)hexamethylendiamin und 4-Morpholino-2,6-dichloro-1,3,5-triazin, das Reaktionsprodukt von 7,7,9,9-Tetramethyl-2-cycloundecyl-1-oxa-3,8-diaza-4-oxospiro-[4,5)decan und Epichlorhydrin und Mischungen hiervon; und/oder Komponente (A) ausgewählt aus einem oder mehreren der in Aspekt 7 angegebenen Polymere ist.
14. Flammgeschützte Kunststoffzusammensetzung nach einem der Aspekte 10 bis 13, dadurch gekennzeichnet, dass
   Komponente (A) zu 60 bis 99 Gew.-%, bevorzugt 60 bis 95 Gew.-% und besonders bevorzugt zu 60 bis 90 Gew.-% bezogen auf das Gesamtgewicht der flammgeschützten Kunstoffzusammensetzung enthalten ist;
   Komponente (B) zu 0,5 bis 15 Gew.-%, bevorzugt 1,0 bis 12 Gew.-% und besonders bevorzugt zu 2 bis 10 Gew.-% bezogen auf das Gesamtgewicht der flammgeschützten Kunstoffzusammensetzung enthalten ist;
   Komponente (C) zu 1 bis 60 Gew.-%, bevorzugt 2 bis 30 Gew.-% und besonders bevorzugt zu 5 bis 25 Gew.-% bezogen auf das Gesamtgewicht der flammgeschützten Kunstoffzusammensetzung enthalten ist;
   Komponente (D) zu 0,05 bis 50 Gew.-%, bevorzugt 0,1 bis 40 Gew.-% und besonders bevorzugt zu 0,2 bis 30 Gew.-% oder 0,1 bis 1 Gew.-% bezogen auf das Gesamtgewicht der flammgeschützten Kunstoffzusammensetzung enthalten ist; wobei
   Komponente (A) bevorzugt ein thermoplastisches Polymer ist.
15. Verwendung einer flammgeschützten Kunststoffzusammensetzung nach einem der Aspekte 10 bis 14 in der Elektro- oder Elektronikindustrie, Maschinen- und Apparatebau, Bauindustrie, Transportindustrie, vorzugsweise Autos, Flugzeuge Eisenbahnen und Schiffe, für medizinische Anwendungen, für Haushaltsgeräte, Fahrzeugteile, Kabel, Konsumartikel, Verpackungen, Möbel und Textilien.
16. Verwendung der in den Aspekten 2 bis 6 angegebenen halogenfreien Sulfonsäureazanylester und/oder halogenfreien Sulfinsäureazanylester als Radikalgeneratoren zur Modifikation von Kunststoffen.
17. Verwendung nach vorhergehendem Aspekt 16, dadurch gekennzeichnet, dass
   das Molekulargewicht der Kunststoffe erhöht wird; und/oder eine Verzweigung oder Vernetzung der Kunststoffe erfolgt; und/oder das Molekulargewicht der Kunststoffe verringert wird; und/oder die Molekulargewichtsverteilung der Kunststoffe beinflusst wird; und/oder
   ungesättigte Monomere auf die Kunststoffe gepfropft werden.
18. Verwendung nach Aspekt 16, dadurch gekennzeichnet, dass der Kunststoff ausgewählt ist aus einem oder mehreren der in Aspekt 7 angegebenen Polymere.
19. Verfahren zum kontrollierten Abbau von Polyolefinen, enthaltend die Schritte:
   V. Bereitstellen zumindest eines halogenfreien Sulfonsäureesters und/oder zumindest eines halogenfreien Sulfinsäureesters;
   VI. Bereitstellen zumindest eines abbaufähigen Polyolefins;
   VII. Kontaktieren und Aufschmelzen der in Schritt I. und II. bereitgestellten Verbindungen;
   VIII. Erhitzen der Schmelze aus Schritt III. für mehr als 1 Minute.
20. Verfahren nach vorhergehendem Aspekt, dadurch gekennzeichnet, dass
   es sich bei dem in Schritt I. bereitgestellten zumindest einen halogenfreien Sulfonsäureester und/oder zumindest einen halogenfreien Sulfinsäureester um eine der in den Aspekten 2 bis 6 angegebenen Verbindungen handelt; und/oder
   die Temperatur während der Schritte III. und IV. so gewählt wird, dass die Halbwertszeit des zumindest einen halogenfreien Sulfonsäureesters und/oder zumindest einen halogenfreien Sulfinsäureesters kleiner als 2 Minuten und bevorzugt kleiner als 1 Minute ist, besonders bevorzugt ist die Temperatur im Bereich von 180 bis 280°C und insbesondere bevorzugt von 200 bis 250°C; und/oder Schritt IV. für mehr als 2 Minuten, bevorzugt für 2 bis 10 Minuten durchgeführt wird.
21. Verfahren zur Vernetzung von Polyolefinen, enthaltend die folgenden Schritte:
   (1) Bereitstellen zumindest eines halogenfreien Sulfonsäureesters und/oder zumindest eines halogenfreien Sulfinsäureesters;
   (2) Bereitstellen zumindest eines abbaufähigen Polyolefins;
   (3) Kontaktieren und Aufschmelzen der in Schritt (1) und (2) bereitgestellten Verbindungen;
   (4) Erhitzen der Schmelze aus Schritt (3) für mehr als 1 Minute.
22. Verfahren gemäß dem vorhergehendem Aspekt, dadurch gekennzeichnet, dass
   das Verfahren einen weiteren Schritt (5) enthält, der vor oder während Schritt (4) ausgeführt wird und vorsieht, dass ein Vernetzungsadditiv ausgewählt aus der Gruppe bestehend aus Triallylisocyanurat, Triisoallylcyanurat, Diallylterephthalat, mehrfunktionellen Acrylaten und Methacrylaten, insbesondere Trimethylolpropantrimethacrylat und Mischungen hiervon, zugesetzt wird; und/oder
   es sich bei dem in Schritt (1) bereitgestellten zumindest einen halogenfreien Sulfonsäureester und/oder zumindest einen halogenfreien Sulfinsäureester um eine der in den Aspekten 2 bis 6 angegebenen Verbindungen handelt; und/oder
   die Temperatur während der Schritte (3) und (4) so gewählt wird, dass die Halbwertszeit des zumindest einen halogenfreien Sulfonsäureesters und/oder zumindest einen halogenfreien Sulfinsäureesters kleiner als 2 Minuten und bevorzugt kleiner als 1 Minute ist, besonders bevorzugt ist die Temperatur im Bereich von 180 bis 280°C und insbesondere bevorzugt von 200 bis 250°C; und/oder Schritt (4) für mehr als 2 Minuten, bevorzugt für 2 bis 10 Minuten durchgeführt wird.
23. Verfahren zum Pfropfen von Polyolefinen, enthaltend die folgenden Schritte:
   f. Bereitstellen zumindest eines halogenfreien Sulfonsäureesters und/oder zumindest eines halogenfreien Sulfinsäureesters;
   g. Bereitstellen zumindest eines abbaufähigen Polyolefins;
   h. Bereitstellen mindestens eines Monomers, das eine pfropfungsfähige Gruppe aufweist;
   i. Kontaktieren und Aufschmelzen der in Schritt a. bis c. bereitgestellten Verbindungen;
   j. Erhitzen der Schmelze aus Schritt d. für mehr als 1 Minute.
24. Verfahren nach dem vorhergehendem Aspekt, dadurch gekennzeichnet, dass
   es sich bei dem in Schritt a. bereitgestellten zumindest einen halogenfreien Sulfonsäureester und/oder zumindest einen halogenfreien Sulfinsäureester um eine der in den Aspekten 2 bis 6 angegebenen Verbindungen handelt; und/oder
   die Temperatur während der Schritte d. und e. so gewählt wird, dass die Halbwertszeit des zumindest einen halogenfreien Sulfonsäureesters und/oder zumindest einen halogenfreien Sulfinsäureesters kleiner als 2 Minuten und bevorzugt kleiner als 1 Minute ist, besonders bevorzugt ist die Temperatur im Bereich von 180 bis 280°C und insbesondere bevorzugt von 200 bis 250°C; und/oder Schritt e. für mehr als 2 Minuten, bevorzugt für 2 bis 10 Minuten durchgeführt wird; und/oder
   das Monomer in Schritt c. ausgewählt ist aus der Gruppe bestehend aus Maleinsäureanhydrid, Itaconsäureanhydrid, Acrylsäure, (Meth)acrylsäureester und Mischungen hiervon.

## Patentansprüche

1. Verwendung mindestens eines halogenfreien Sulfonsäureesters und/oder mindestens eines halogenfreien Sulfinsäureesters, **dadurch gekennzeichnet, dass** es sich bei den halogenfreien Sulfonsäureestern und/oder halogenfreien Sulfinsäureestern um halogenfreie Sulfonsäureazanylester der allgemeinen Formel (la) und/oder um halogenfreie Sulfinsäureazanylester der allgemeinen Formel (Ib) handelt; 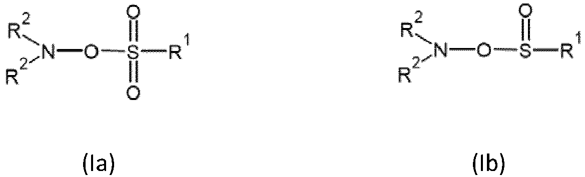 wobei die Reste R¹ und R² jeweils unabhängig voneinander ausgewählt sind aus der Gruppe bestehend aus substituierten oder unsubstituierten Alkylgruppen, Heteroalkylgruppen, Cycloalkylgruppen, Heterocycloalkylgruppen, Acylgruppen, Arylgruppen und Heteroarylgruppen, wobei 2 Reste R² ein zyklisches System bilden können, als Radikalgeneratoren zur Modifikation von Kunststoffen.

2. Verwendung nach Anspruch 1, **dadurch gekennzeichnet, dass** der halogenfreie Sulfonsäureester ein Sulfonsäureazanylester ausgewählt ist aus der Gruppe bestehend aus einer der Verbindungen mit den nachfolgenden Formeln oder Mischungen daraus: 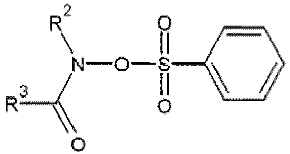 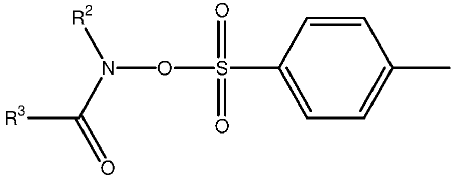 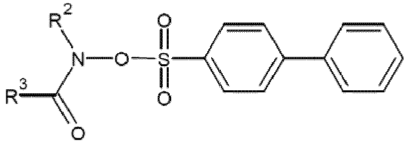 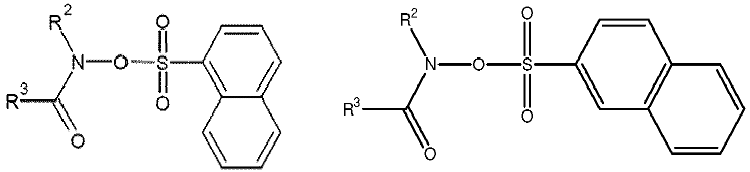 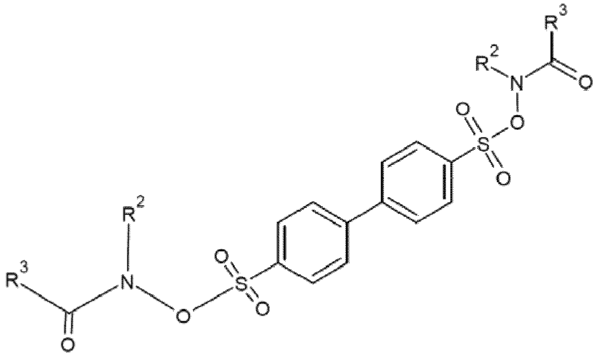
wobei R² die gleiche Bedeutung hat wie oben angegeben und bevorzugt ausgewählt ist aus der Gruppe bestehend aus substituierten oder unsubstituierten Alkylgruppen, Heteroalkylgruppen, Cycloalkylgruppen, Heterocycloalkylgruppen; und
R³ ausgewählt ist aus der Gruppe bestehend aus substituierten oder unsubstituierten Alkylgruppen, Heteroalkylgruppen, Cycloalkylgruppen, Heterocycloalkylgruppen;
wobei R² und R³ ein zyklisches System bilden können; und
wobei die aromatischen Struktureinheiten substituiert sein können;
wobei Alkylgruppen als Substituenten bevorzugt sind.

3. Verwendung nach Anspruch 1, **dadurch gekennzeichnet, dass** der halogenfreie Sulfonsäureester ein Sulfonsäureazanylester mit der unten angegebenen Formel ist; 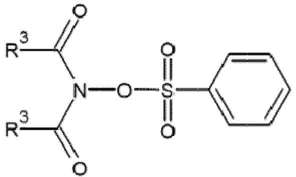 wobei R³ ausgewählt ist aus der Gruppe bestehend aus substituierten oder unsubstituierten Alkylgruppen, Heteroalkylgruppen, Cycloalkylgruppen, Heterocycloalkylgruppen und einem zyklischen System gebildet aus 2 Resten R³.

4. Verwendung nach Anspruch 1, **dadurch gekennzeichnet, dass** der halogenfreie Sulfonsäureester ein Sulfonsäureazanylester ausgewählt ist aus der Gruppe bestehend aus einer der Verbindungen mit den nachfolgenden Formeln oder Mischungen daraus:

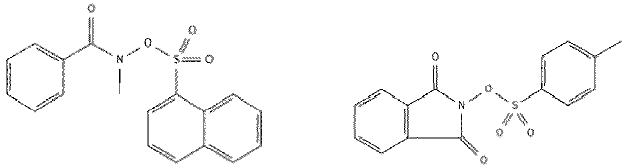

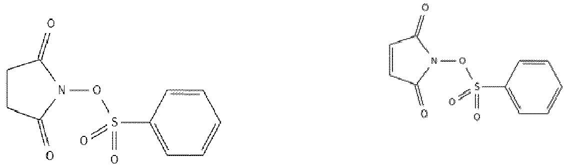

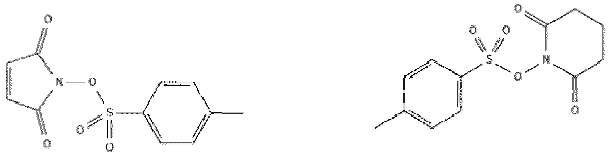

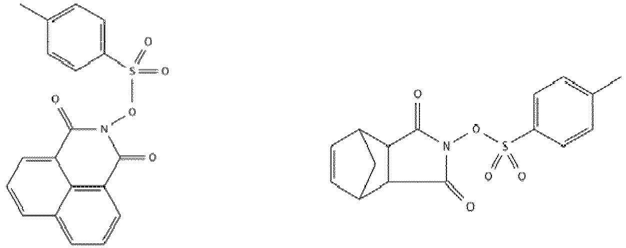

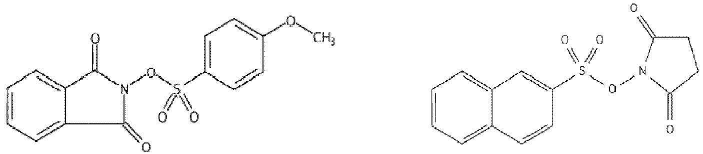

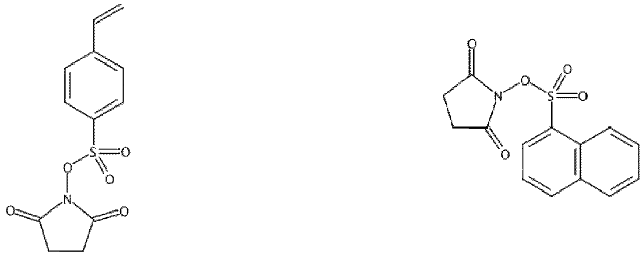

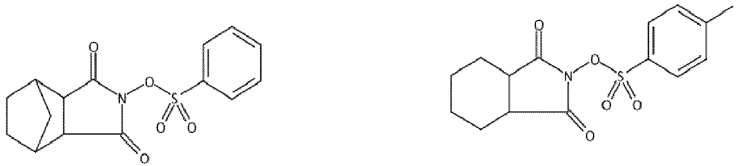

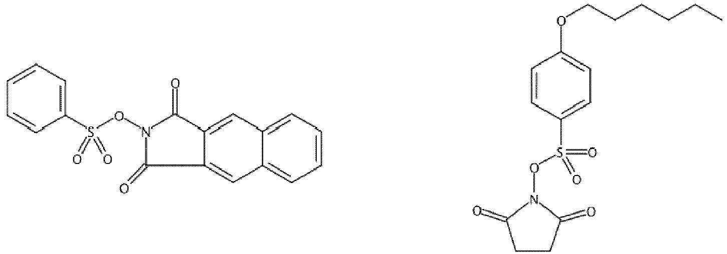

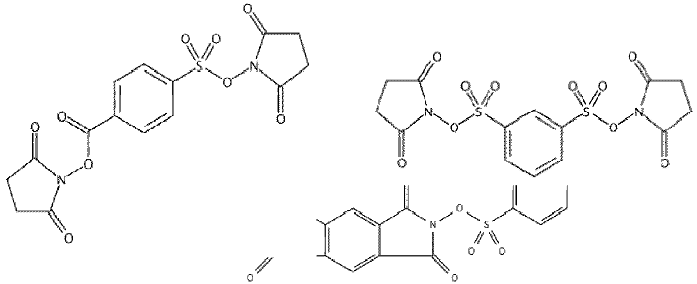

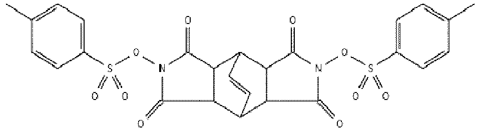

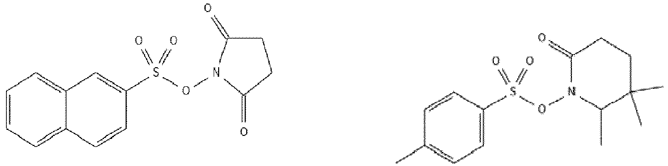

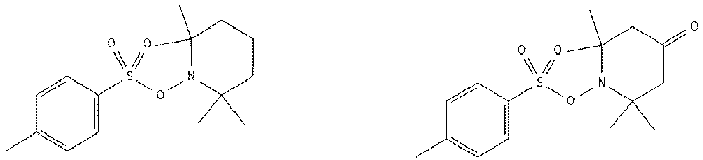

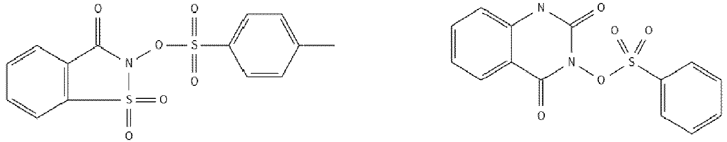

5. Verwendung nach Anspruch 1, **dadurch gekennzeichnet, dass** der halogenfreie Sulfonsäureester ein Sulfonsäureazanylester in oligomerer oder polymerer Form ist, der bevorzugt durch Polymerisation oder polymeranaloge Umsetzung hergestellt wird aus Monomeren ausgewählt aus der Gruppe bestehend aus einer der Verbindungen mit den nachfolgenden Formeln oder Mischungen daraus:

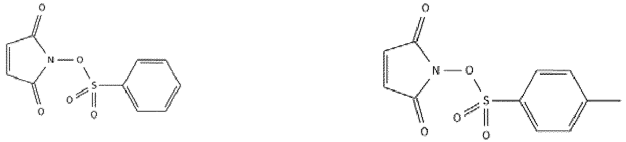

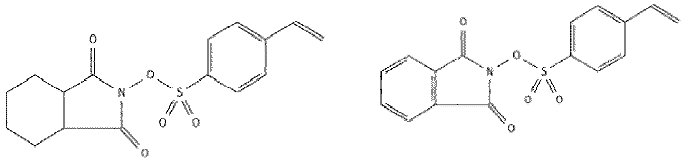

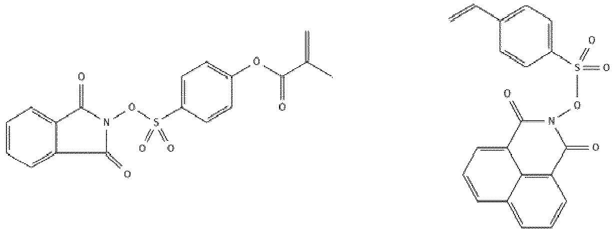

6. Verwendung nach einem der vorhergehenden Ansprüche, **dadurch gekennzeichnet, dass** der Kunststoff ausgewählt ist aus der Gruppe bestehend aus
a) Polymeren aus Olefinen oder Diolefinen, bevorzugt Polyethylen, insbesondere bevorzugt LDPE, LLDPE, VLDPE, ULDPE, MDPE, HDPE, UHMWPE, durch Einsatz von Metallocen-Katalysatoren hergestelltes Polyethylen, Polypropylen, langkettenverzweigte Polypropylen-Copolymere die mit alpha-Olefinen als Comonomere hergestellt werden, Polyisobutylen, Poly-4-methyl-penten-1, Polybutadien, Polyisopren, Polycycloocten, Polyalkylen-Kohlenmonoxid-Copolymere, Copolymeren in Form von statistischen oder Blockstrukturen, insbesondere Polypropylen-Polyethylen (EP), EPM oder EPDM, Ethylen-Vinylacetat (EVA), Ethylen-Acrylester, insbesondere Ethylen-Butylacrylat, Ethylen-Acrylsäure und deren Salze, sowie Terpolymere, insbesondere Ethylen-Acrylsäure-Glycidylacrylat, Pfropfpolymere, insbesondere Polypropylen-g- Maleinsäureanhydrid, Polypropylen-g-Acrylsäure und Polyethylen-g-Acrylsäure, Polyethylen-Polybutylacrylat-graft-Maleinsäureanhydrid;
b) Polystyrol, Poly-alpha-methylstyrol, Polyvinylnaphthalin, Polyvinylbiphenyl, Polyvinyltoluol, Styrol-Butadien (SB), Styrol- Butadien-Styrol (SBS), Styrol-Ethylen-Butylen-Styrol (SEBS), Styrol-Ethylen-Propylen- Styrol, Styrolisopren, Styrol-Isopren-Styrol (SIS), Styrol-butadien-acrylnitril (ABS), Styrol-acrylnitril (SAN), Styrol-acrylnitril-acrylat (ASA), Styrol-Ethylen, Styrol-Maleinsäureanhydrid-Polymere einschießlich entsprechender Pfropfcopolymere, insbesondere Styrol auf Butadien, Maleinsäureanhydrid auf Styrol- Butadien-Styrol oder Styrol-Ethylen-Butylen-Styrol, sowie Pfropfcopolymere aus Methylmethacrylat, Styrol-Butadien und Styrol-butadien-acrylnitril (ABS) oder Styrol-butadien-methacrylnitril (MABS) sowie hydrierte Polystyrol-Derivate wie z.B. Polyvinylcyclohexan;
c) halogenenthaltenden Polymeren, insbesondere Polyvinylchlorid (PVC), Polychloropren und Polyvinylidenchlorid (PVDC), Copolymeren aus Vinylchlorid und Vinylidenchlorid oder aus Vinylchlorid und Vinylacetat, chloriertes Polyethylen, Polyvinylidenfluorid, Epichlorhydrin-Homo und Copolymere insbes. mit Ethylenoxid (ECO);
d) Polymeren von ungesättigten Estern, insbesondere Polyacrylate und Polymethacrylate, besonders bevorzugt, Polymethylmethacrylat (PMMA), Polybutylacrylat, Polylaurylacrylat, Polystearylacrylat, Polyacrylnitril, Polyacrylamide, Copolymere, insbesondere Polyacrylnitril-Polyalkylacrylat;
e) Polymeren aus ungesättigten Alkoholen und Derivaten, insbesondere Polyvinylalkohol, Polyvinylacetat, Polyvinylbutyral, Polyallylphthalat, Polyallylmelamin;
f) Polyacetalen, insbesondere Polyoxymethylen (POM) oder Copolymere insbesondere mit Butanal;
g) Polyphenylenoxiden und Blends mit Polystyrol oder Polyamiden;
h) Polymeren von cyclischen Ethern insbesondere Polyethylenglycol, Polypropylenglycol, Polyethylenoxid, Polypropylenoxid;
i) Polyurethanen, bevorzugt aus hydroxyterminierten Polyethern oder Polyestern und aromatischen oder aliphatischen Isocyanaten, insbesondere lineare Polyurethane und Polyharnstoffe;
j) Polyamiden, insbesondere PA 6, PA 6.6, PA 6.10, PA 4.6, PA 4.10, PA 10.10, PA 6.12, PA 12.12, PA 11, PA 12 sowie teilaromatische und aromatische Polyamide, insbesondere Polyphthalamide, besonderes bevorzugt hergestellt aus Terephthalsäure und/oder Isophthalsäure und aliphatischen Diaminen oder aus aliphatischen Dicarbonsäuren, insbesondere Adipinsäure oder Sebazinsäure und aromatischen Diaminen, insbesondere 1,4- oder 1,3-Diaminobenzol;
k) Polyimiden, insbesondere Polyamidimiden, Polyetherimiden, Polyesterimiden, Poly(ether)ketonen, Polysulfonen, insbesondere Polyethersulfonen, Polyarylsulfonen, Polyphenylensulfiden, Polybenzimidazolen, Polyhydantoinen;
l) Polyestern aus aliphatischen oder aromatischen Dicarbonsäuren und Diolen oder aus Hydroxy-Carbonsäuren wie z.B. Polyethylenterephthalat (PET), Polybutylenterephthalat (PBT), Polypropylenterephthalat, Polyethylennaphthylat, Poly-1,4-dimethylolcyclohexanterephthalat, Polyhydroxybenzoat, Polyhydroxynaphthalat, Polymilchsäure (PLA), Polybutylensuccinat (PBS), Polyhydroxyalkanoate (PHA) wie z.B. Polyhydroxybuttersäure (PHB) oder Polyhydroxyvaleriansäure (PHV), Polycaprolacton;
m) Polycarbonaten, Polyestercarbonaten, sowie Blends von Polycarbonaten mit anderen Polymeren, insbesondere PC/ABS, PC/PBT, PC/PET/PBT;
n) Cellulosederivate, insbesondere Cellulosenitrat, Celluloseacetat, Cellulosepropionat, Cellulosebutyrat;
o) Epoxidharzen, bestehend aus di- oder polyfunktionellen Epoxidverbindungen in Kombination mit z.B. Härtern auf der Basis von Aminen, Anhydriden, Dicyandiamid, Mercaptanen, Isocyanaten oder katalytisch wirkenden Härtern,
p) Phenolharzen wie z.B. Phenol-Formaldehyd-Harze, Harnstoff-Formaldehyd-Harze, Melamin-Formaldehydharze,
q) ungesättigten Polyesterharzen aus ungesättigten Dicarbonsäuren und Diolen mit Vinylverbindungen z.B. Styrol, Alkydharze
r) Silikonen, z.B. auf der Basis von Dimethylsiloxanen, Methyl-Phenylsiloxanen oder Diphenylsiloxanen z.B. Vinylgruppen terminiert;
s) sowie Mischungen, Kombinationen oder Blends aus zwei oder mehr der unter a) bis r) genannten Polymere.

7. Verwendung nach einem der vorhergehenden Ansprüche, **dadurch gekennzeichnet, dass**
das Molekulargewicht der Kunststoffe erhöht wird; und/oder eine Verzweigung oder Vernetzung der Kunststoffe erfolgt; und/oder das Molekulargewicht der Kunststoffe verringert wird; und/oder die Molekulargewichtsverteilung der Kunststoffe beinflusst wird; und/oder
ungesättigte Monomere auf die Kunststoffe gepfropft werden.

8. Verfahren zum kontrollierten Abbau von Polyolefinen, enthaltend die Schritte:
I. Bereitstellen zumindest eines halogenfreien Sulfonsäureesters und/oder zumindest eines halogenfreien Sulfinsäureesters, **dadurch gekennzeichnet, dass** es sich bei den halogenfreien Sulfonsäureestern und/oder halogenfreien Sulfinsäureestern um halogenfreie Sulfonsäureazanylester der allgemeinen Formel (la) und/oder um halogenfreie Sulfinsäureazanylester der allgemeinen Formel (Ib) handelt; 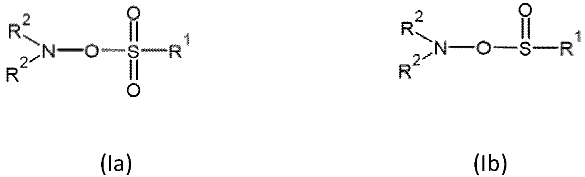 wobei die Reste R¹ und R² jeweils unabhängig voneinander ausgewählt sind aus der Gruppe bestehend aus substituierten oder unsubstituierten Alkylgruppen, Heteroalkylgruppen, Cycloalkylgruppen, Heterocycloalkylgruppen, Acylgruppen, Arylgruppen und Heteroarylgruppen, wobei 2 Reste R² ein zyklisches System bilden können als Radikalgenerator;
II. Bereitstellen zumindest eines abbaufähigen Polyolefins; insbsondere Polypropylen oder ein langkettenverzweigtes Polypropylen-Copolymer, das mit alpha-Olefinen als Comonomere hergestellt wird;
III. Kontaktieren und Aufschmelzen der in Schritt I. und II. bereitgestellten Verbindungen;
IV. Erhitzen der Schmelze aus Schritt III. für mehr als 1 Minute.

9. Verfahren nach vorhergehendem Anspruch, **dadurch gekennzeichnet, dass**
die Temperatur während der Schritte III. und IV. so gewählt wird, dass die Halbwertszeit des zumindest einen halogenfreien Sulfonsäureesters und/oder zumindest einen halogenfreien Sulfinsäureesters kleiner als 2 Minuten und bevorzugt kleiner als 1 Minute ist, besonders bevorzugt ist die Temperatur im Bereich von 180 bis 280°C und insbesondere bevorzugt von 200 bis 250°C; und/oder Schritt IV. für mehr als 2 Minuten, bevorzugt für 2 bis 10 Minuten durchgeführt wird.

10. Verfahren zur Vernetzung von Polyolefinen, enthaltend die folgenden Schritte:
(1) Bereitstellen zumindest eines halogenfreien Sulfonsäureesters und/oder zumindest eines halogenfreien Sulfinsäureesters, **dadurch gekennzeichnet, dass** es sich bei den halogenfreien Sulfonsäureestern und/oder halogenfreien Sulfinsäureestern um halogenfreie Sulfonsäureazanylester der allgemeinen Formel (la) und/oder um halogenfreie Sulfinsäureazanylester der allgemeinen Formel (Ib) handelt als Radikalgenerator; 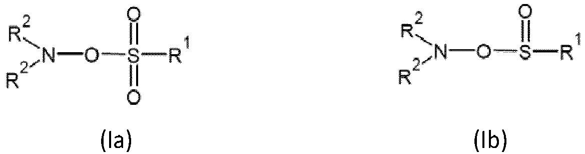
(2) Bereitstellen zumindest eines abbaufähigen Polyolefins insbesondere ein Polyethylen oder ein Polyethylen-Copolymer;
(3) Kontaktieren und Aufschmelzen der in Schritt (1) und (2) bereitgestellten Verbindungen;
(4) Erhitzen der Schmelze aus Schritt (3) für mehr als 1 Minute.

11. Verfahren zur Vernetzung oder Verzweigung von Polyolefinen, enthaltend die folgenden Schritte:
(1) Bereitstellen zumindest eines halogenfreien Sulfonsäureesters und/oder zumindest eines halogenfreien Sulfinsäureesters, **dadurch gekennzeichnet, dass** es sich bei den halogenfreien Sulfonsäureestern und/oder halogenfreien Sulfinsäureestern um halogenfreie Sulfonsäureazanylester der allgemeinen Formel (la) und/oder um halogenfreie Sulfinsäureazanylester der allgemeinen Formel (Ib) handelt als Radikalgenerator; 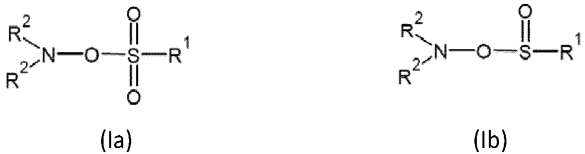
(2) Bereitstellen zumindest eines abbaufähigen Polyolefins insbesondere ein Polypropylen oder ein langkettenverzweigtes Polypropylen-Copolymer, das mit alpha-Olefinen als Comonomere hergestellt wird, Polyethylen oder ein Polyethylen-Copolymer
(3) Bereitstellen eines mehrfunktionellen Vernetzungsadditivs ausgewählt aus der Gruppe bestehend aus Triallylisocyanurat, Triisoallylcyanurat, Diallylterephthalat, mehrfunktionellen Acrylaten und Methacrylaten, insbesondere Trimethylolpropantrimethacrylat und Mischungen hiervon
(4) Kontaktieren und Aufschmelzen der in Schritt (1) und (2) und (3) bereitgestellten Verbindungen;
(5) Erhitzen der Schmelze aus Schritt (4) für mehr als 1 Minute.

12. Verfahren nach vorhergehendem Anspruch, **dadurch gekennzeichnet, dass**
es sich bei dem in Schritt (1) bereitgestellten zumindest einen halogenfreien Sulfonsäureester und/oder zumindest einen halogenfreien Sulfinsäureester um eine der in den Ansprüchen 2 bis 6 angegebenen Verbindungen handelt; und/oder
die Temperatur während der Schritte (4) und (5) so gewählt wird, dass die Halbwertszeit des zumindest einen halogenfreien Sulfonsäureesters und/oder zumindest einen halogenfreien Sulfinsäureesters kleiner als 2 Minuten und bevorzugt kleiner als 1 Minute ist, besonders bevorzugt ist die Temperatur im Bereich von 180 bis 280°C und insbesondere bevorzugt von 200 bis 250°C; und/oder Schritt (5) für mehr als 2 Minuten, bevorzugt für 2 bis 10 Minuten durchgeführt wird.

13. Verfahren zum Pfropfen von Polyolefinen, enthaltend die folgenden Schritte:
a. Bereitstellen zumindest eines halogenfreien Sulfonsäureesters und/oder zumindest eines halogenfreien Sulfinsäureesters, **dadurch gekennzeichnet, dass** es sich bei den halogenfreien Sulfonsäureestern und/oder halogenfreien Sulfinsäureestern um halogenfreie Sulfonsäureazanylester der allgemeinen Formel (la) und/oder um halogenfreie Sulfinsäureazanylester der allgemeinen Formel (Ib) handelt; 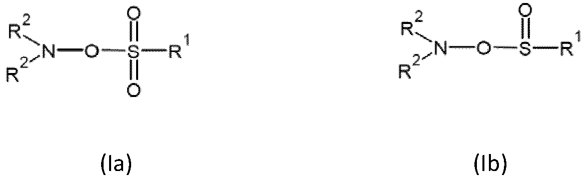
b. Bereitstellen zumindest eines abbaufähigen Polyolefins;
c. Bereitstellen mindestens eines Monomers, das eine pfropfungsfähige Gruppe aufweist;
d. Kontaktieren und Aufschmelzen der in Schritt a. bis c. bereitgestellten Verbindungen;
e. Erhitzen der Schmelze aus Schritt d. für mehr als 1 Minute.

14. Verfahren nach dem vorhergehendem Anspruch, **dadurch gekennzeichnet, dass**
die Temperatur während der Schritte d. und e. so gewählt wird, dass die Halbwertszeit des zumindest einen halogenfreien Sulfonsäureesters und/oder zumindest einen halogenfreien Sulfinsäureesters kleiner als 2 Minuten und bevorzugt kleiner als 1 Minute ist, besonders bevorzugt ist die Temperatur im Bereich von 180 bis 280°C und insbesondere bevorzugt von 200 bis 250°C; und/oder Schritt e. für mehr als 2 Minuten, bevorzugt für 2 bis 10 Minuten durchgeführt wird; und/oder
das Monomer in Schritt c. ausgewählt ist aus der Gruppe bestehend aus Maleinsäureanhydrid, Itaconsäureanhydrid, Acrylsäure, (Meth)-acrylsäureester und Mischungen hiervon.
